(19) Europäisches Patentamt
European Patent Office
Office européen des brevets

(11) **EP 4 583 367 A1**

(12) **EUROPEAN PATENT APPLICATION**

(43) Date of publication:
**09.07.2025 Bulletin 2025/28**

(21) Application number: 24403201.7

(22) Date of filing: **05.01.2024**

(51) International Patent Classification (IPC):
**H02K 1/24** *(2006.01)*  **H02K 16/02** *(2006.01)*
**H02K 19/10** *(2006.01)*  **H02K 1/14** *(2006.01)*
**H02K 7/14** *(2006.01)*  **H02K 9/06** *(2006.01)*

(52) Cooperative Patent Classification (CPC):
**H02K 1/246; H02K 1/145; H02K 19/103;**
H02K 7/14; H02K 9/06; H02K 2201/06;
H02K 2201/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Teia Dos Santos Mendes Gomes, Luis
Daniel
14197 Berlin (DE)**

(72) Inventor: **Teia Dos Santos Mendes Gomes, Luis
Daniel
14197 Berlin (DE)**

(54) **MAGNETIC RELUCTANCE TURBINE/MOTOR FOR FUTURE GROUND- , FLIGHT-, AND
SPACE-BASED ELECTRIC VEHICLES**

(57)    The invention relates to a switched reluctance motor that includes two identical modules interconnected in parallel, each composed of a rotor assembly and two joined halves of a stator assembly. The two rotor assemblies are mounted and locked onto the same shaft such that when one is aligned with the stator, the other is unaligned. More particularly, the rotor assemblies are composed of a non-ferromagnetic shaft-mounted and rotational-locked disc, with slotted ferromagnetic blades forming the rotor poles. Two pairs of windings, located at either side of said rotor assembly, are enclosed within each stator's half and are coiled circumferentially around the engine axis, to facilitate assembly and maintenance. Each module has the same number of stator and rotor poles. Thus, the stator's cross section at the rotor mid-section (during alignment) forms two vertically-mirrored O-shaped magnetic loops, where the flux exists the rotor vertically to the stator at the tip, travels around the windings on either side, down radially via the stator's poles, and enters axially back into the rotor blade. Electrically, each motor module is activated in an alternating way. Forced-air cooling is driven through the motor via rotating wings embodied into the rotor blades, and also via shaft mounted side fans. Two covers connect on either side of the two linked modules representing all together the static part of the motor, while bearings provide rotational interface between said covers and the shaft plus rotor assemblies. The vehicle and/or load-bearing machine's transmission axle slides inside, and is geared to, the shaft via inner teeth. The stator design minimizes coil exposure to ferromagnetic material during unalignment, effectively reducing unaligned induction. In another embodiment of the novel motor, the rotor gaps in between blades are filled with vacuum blades that, due to their absence of magnetic permeability, break completely the unaligned magnetic circuit, thus drastically enhancing this unaligned induction effect. The collective end outcome is a boost in torque production and power conversion capacity, including a readily available internal air-cooling ability.

FIG. 12

EP 4 583 367 A1

**Description**

**References Cited**

U.S. 2017/0110943 to Tong; U.S. 2005/0110355 to Sakuma et al.; U.S. 3,671,789 to Menzies; U.S. 2013/0076177 to Seok; U.S. 2017/0324311 to Tsutsui; U.S. 2013/0134805 to Jung; U.S. 2021/0376676 to Takenori; E.P. 0814558A2 to Kim & Suwon-city; U.S. 2013/0134806 to Cho; U.S Pat. No. 5925965 to Li et al.; U.S. 2010/0295389 to Tessier et al.

**Other Publications**

-> Takeno M, Chiba A, Hoshi N, Ogasawara S, Takemoto M, Rahman MA. (2012). Test results and torque improvement of the 50-kW switched reluctance motor designed for hybrid electric vehicles. IEEE Trans. on Industry Applications, 48(4): 1327-1334
→ Stuikys, A. and Sykulski, J. (2020). Average Rated Torque Calculations for Switched Reluctance Machines Based on Vector Analysis. IntechOpen Access Books, http://dx.doi.org/10.5772/intechopen.89097
-> Teia, L. (2024). Dual-Sided Rotor Design for Performance Boost of Synchronous Reluctance Motors in Electric Vehicles. Journal of Applied Physics Research, https://ccsenet.org/journal/index.php/apr/issue/archives
→ Bolognesi, P. (2008). Design and manufacturing of an unconventional variable reluctance machine. 4th IET Conf. On Power Electronics, Machines and Drives: 45-49
→ Torkaman, H., Ghaheri, A. & Keyhani, A. (2019). Axial flux switched reluctance machines: a comprehensive review of design and topologies. IET Electric Power Applications, 13(3): 310-321

**BACKGROUND OF THE INVENTION**

A. Field of the invention

The field of the present invention is related to a novel magnetic synchronous reluctance machine with features described herein installed preferably on an electric vehicle. More particularly, the present invention relates to a machine that transforms electric power into mechanical power (and vice versa) via the exclusive principle of magnetic reluctance (no permanent magnets are employed), encompassing an easier assembly and modular approach, where both the magnetic circuit is in plane with the axis of rotation and the electrical winding is coiled in a circular manner circumferential around the said axis of rotation. Moreover, the novel motor architecture enables a powerful and effective air-based cooling of the internal components, encompassing the electric windings plus rotor and stator.

B. Background

Ever more potent and efficient electric motor solutions are sought for electric-powered vehicle means of transportation and the aeronautical market (in particular for electric aviation and rocketry) is booming. In recent years there has been an extraordinary visible expansion in the application of electrical-driven transportation, being of particular notice the issuing of electric automobiles by all major manufactures, and further impactfull and noticeable applications such as the dissemination of rentable electric scooters.

The need for more environmentally-friendly electric motors has driven manufacturers to invest on non-rare earth design solutions, whose primary goal is to provide torque at an efficient electric conversion and acceptable system complexity without the need of using permanent magnets. An example of this trend is the recently published research on the SyncRM 2 (or concentrated-coiled SRM2) being proposed for replacing a permanent magnet synchronous motor currently commercialized in an established electric hybrid automobile (Takeno et al 2012, Stuikys and Sykulski 2020). The challenge here is to boost reluctance motor performance such that the enhancement imparted by the usage of permanent magnets is no longer required, and thus not sought.

Prior art in electrical motor/generator technology splits into two major families: induction motors (i.e., squirrel cage rotor utilizing Faraday's law in association with Lenz's law) and synchronous motors (with magnets utilizing Faraday's law, without magnets utilizing reluctance torque, and the popular combination of both often employed in the automotive industry). The present invention falls in the later category of synchronous motors, and is further divided into two main categories: magnetic axial-flux and radial-flux electric motors.

Radial-flux motors employ magnetic circuits or loops that are preferentially inplane perpendicular to the axis of rotation of the motor. They may or may not involve the usage of permanent magnets. The generally shaped cylindrical rotor is slided inside an annular stator possessing physical poles in its inner surface. In between these poles are gaps along which electrical conductive wires are coiled. The principal direction of magnetic flux through the magnetic circuit is radially-inplane and perpendicular to the motor rotational axis. The present invention is associated with the axial-flux switched synchronous reluctance electric motors (SRMs) without embedded permanent magnets.

There are two predominant subcategories to SRMs, either rotors incorporating induced magnetic poles via employing flux carrier paths and corresponding flux barriers to minimize magnetic leakages (thus imparting on the rotor a preferred direct axis and quadrature axis per each symmetry quadrant), which are driven by a stator possessing distributed winding. In a relatively recent effort, U.S Pat. No. 2017/0110943 to Tong optimizes the rotor flux path distribution by introducing a new geometrical disposition of the flux carriers and flux barriers. U.S Pat. No. 2005/0110355 to Sakuma et al. influences said rotor flux path distribution by introducing tailored permanent magnets in the slots formed by the flux barriers. U.S Pat. No. 3,671,789 to Menzies highlights the fact that research in the magnetic flux circuits in switched synchronous reluctance motors has been ongoing over more than four decades, with primary focus on rotor's flux carriers/barriers optimization, whist the stator general layout remains practically the same.

Alternatively rotors incorporating physical magnetic poles that aligned with corresponding stator physical magnetic poles (where the axis alignment or misalignment with the rotor pole determines its direct and quadrature axis). The present invention is primarily associated with the later configuration of rotor discrete poles with discrete windings around the stator poles. Development of this type of motors has been extensive. For example, U.S Pat. No. 2013/0076177 to Seok aims at reducing assembly and manufacturing effort and cost by embedding a simplified printed circuit board attached to the side of the upper portion of the stator to bypass the complicated connection to the windings. U.S Pat. No. 2017/0324311 to Tsutsui minimizes torque ripple by inclining the stator physical poles and chamfering the edges of the rotor physical poles. U.S Pat. No. 2013/0134805 to Jung embeds permanent magnets in the stator, more in particular in between the windings, to re-enforce the produced magnetic fluxes. U.S Pat. No. 2021/0376676 to Takenori introduces structurally-flexible nonmagnetic bridges between rotor poles as a means to reduce aerodynamic windage losses, specially at high rotational speeds. E.P. 0814558A2 to Kim & Suwon-city targets lower noise emissions via a combination of selectively choosing the number of stator and rotor poles, plus taylored shaping of the rotor poles. U.S Pat. No. 2013/0134806 to Cho looks again at improving the rotor, only this time by introducing cavities and weights to achieve a more balanced and reliable rotational behavior.

Axial-flux motors employ magnet circuits or loops that are preferentially aligned with the axis of rotation of the motor. A comprehensive summary of such machines (Torkaman et al, 2019) shows substantial differences between the existing axial-flux motor prior art and the present invention. An often adopted SRM layout of such a type is that of at least one rotor possessing axial-orientated poles placed in one side (and often in both sides) of a stator composed conventionally of multiple magnetic conductive axial-orientated poles distributed in a matching circumferential manner, possessing around each several axial-orientated loops of conductive electric wire. Here, the principal direction of the magnetic flux (as it transits through the magnetic circuit, and in particular across the one or sometimes two gaps; if a double-sided rotor is employed between the rotor and stator) is axial. One such example is U.S Pat. No. 5925965 to Li et al. who also presents a manufacturing method of the rotor and stator consists of rolling pre-cut sheets that results in a form of additive layering for the formation of said components. U.S Pat. No. 2010/0295389 to Tessier et al. comprises of several rotor discs slotted in between the teeth/poles embedded in perpendicularly-orientated stator beams (attached to an outer casing). But this arrangement is magnetically activated via several C-shaped coils distributed around the stator beams, while the present invention is at least different by adopting two (or more) circumferential windings circumferential-coiled around the motor's rotational axis.

A more relevant example is presented by Bolognesi (2008), but several major differences exist between this prior art and the present invention, hereafter described. In this particular prior art, the rotor is made of a single ferromagnetic disc with inbuilt circumferential distributed teeth protrusions on either side of its motor axis perpendicular disc faces, while in the present invention the rotor is modular with detachable ferromagnetic blades slotted into and around in a circumferential-distributed manner of a non-ferromagnetic disc. Moreover, this prior art presents a single O-loop magnetic circuit per rotor powered by a single coil at the top, while the invention presents two vertically-symmetrical O-loop magnetic circuits powered by two coils. Thereof related, in the said prior art the teeth magnetically connect on either side of the rotor, providing only axial flux when transiting in and out of the rotor, while in the present invention the blade magnetically connects the circuit at the top with radial magnetic flux when transiting out of the rotor, and at the bottom with radial magnetic flux when transiting into the rotor from both lateral sides. The prior art operates with threee-phases, while the present invention operates with two-phases. Also, the stator of this particular prior art has a constant C-shaped crossection with teeth protrusions, while the novel invention has a stator design that expressly minimizes the presence of all ferromagnetic material in between stator poles to further suppress unaligned induction, thus boosting torque production. Moreover, no cooling is provided in this prior art [and indeed associated thermal management problems are highlighted by Torkaman et al (2019)], while in the present invention two possible forced air-cooling systems are embodied in the functioning of the novel motor.

The primary disadvantage shared by all of the above subcategories/prior art inventions is the fact that any torque dense SR motor needs to have the coils separated as much as possible from the larger part of the ferromagnetic material (except the blocks/poles around which they are winded around) to significantly minimize unaligned induction, and thus maximize saliency ratio. If a large chuck of ferromagnetic material remains attached to the stator (like it is typical in the prior art SR motors, where the upper ring remains attached to the stator), during the unaligned state this will greatly conduct magnetic flux out of the coils (closing the magnetic loop via the internal air cavities), resulting in a large unwanted unaligned induction response, thus significantly reducing the induction torque (and power) conversion capability of the motor. This problem has been overcome with a recent design modification to the existing SRM2 motor, culminating in the already published (by the present inventor) named the Dual-sided SyncRM (Teia, 2024). This modification is associated with the fundamental principle described as follows. There are two ways to enhance the electromagnetic torque, power output and efficiency of a synchronous reluctance motor are: (1) increasing the inductance of the magnetic circuits formed by the stator and rotor when aligned, or (2) reducing their inductance when they are unaligned. Both cases result in an increase of the (unsaturated) saliency ratio. This article explores the second approach. It achieves this by partitioning the magnetic material of the stator, just radially outwards from the winding, and reassigned this to the rotor. By doing so, this change further minimizes the amount of magnetic material in contact, with the coils during the unaligned case (i.e., reducing unaligned and unsaturated induction), boosting the co-energy W' and ultimately imparted an increase in reluctance torque (and electromagnetic power) by 29% of the SRM2 reluctance motor. Moreover, the conversion efficiency from electric to electromagnetic power raised to 91% (against 80% for the SRM2) with a saliency ratio of 10 (against 7 for the SRM2), with these values being applicable at the rated operational speed of 1200 rpm. Thus, a primariy motivation in the present invention that has been overlooked by prior art, is this reduction of magnetic material in the stator present when there is rotor-to-stator unalignment to boost torque production and power conversion efficiency (i.e., the aforementioned need at the beginning of this section). This design change to the rotor and stator was introduced by the present inventor earlier in this published Dual-sided SyncRM, and is further explored in a new category of SRMs with the present invention.

The present invention is an hybrid between axial- and radial-flux motors, because the magnetic flux enters the rotor axially but leaves it radially. Plus the architecture resembles more of an axial-flux motor, but the predominant magnetic flux direction is radial.

Moreover, it is agreed by those skilled in the art that coiling electric wire loops around poles within a stator is a work intensive and time-consuming non-trivial activity (i.e., wires are packed in stator cavities of difficult access) during the manufacture process of an axial-flux electric motor. Moreover, it is equally intensive to have to rewire a SRM upon a short-circuit. Despite the foregoing, there exists the need for a more straight forward and flexible winding strategy that reduces time and effort for a technician to coil wires around the stator physical poles of a synchronous reluctance machine.

In connection to this, it is also known to those skilled in the art that such enclosed cavities (i.e., the axial-looped coils inside the stator) make it difficult to cool down the embedded electric wires. As a result, ineffective cooling of the electric wire coils often lead to the formation of hot spots that melt the wiring insulation creating a short circuit, and unavoidably an operational breakdown of the machine. This is unwarranted as motor downtime implies repair costs and possibly either a halted electric vehicle of production line, with foreseeable negative repercussions on project costs and lead times. Thermal extraction of heat is in many cases either constraint to conduction (as in industrial graded electrical motors) or employ complex liquid-cooling schemes involving additional expensive components such as pumps, extra piping and radiators. Also not to mention that in a case of a leakage, the liquid-coolant would be partially- or totally-lost, reducing or even eliminating heat extraction capability. Therefore, while the technology of switched synchronous reluctance motors varies in rotor design (pole or flux barriers/carriers) and winding strategy (concentrated or distributed), there is a common need in reluctance electric motors for an electric wire coiling scheme that enables a higher exposure (of the wires) to cooling agents.

## SUMMARY OF THE INVENTION

The primary objective of the present invention is to provide a switched reluctance motor (SRM) that includes an easier means of coiling the electric wires, so as to lean SRM production and maintenance (i.e., re-wiring) ability, while yielding via a hybrid axial-flux and radial-flux rotor-stator design superior levels of torque production and energy conversion, without the usage of permanent magnets.

According to a preferred embodiment of the present invention, it is provided a SRM that includes two identical modules connected physically in parallel, holding within each module a stator assembly and a rotor assembly, where for the purpose of nomenclature one is named a front module and the other the rear module. Each stator assembly, contains two preferably identical halves attached back-to-back as fixed components composed each of a ferromagnetic material distributed in a circumferential-segmented intermittent geometry, where each odd pole-shaped segment or saliency is composed by a portion of said material that forms part of a magnetic circuit, and each even segment is predominantly composed of the absence of said circuit-forming material. Here, the said magnetic circuits is inplane with the axis of rotation (unlike radial-flux motors whose magnetic circuits are conventionally perpendicular to said axis), and located at a given radial distance from said axis, and whose shape is not necessarily dependent on said radial distance (a scaling advantage present in axial-flux motors). -As a related embodiment, the stator assembly also contains a set of windings, comprising of electrical conductors coiled in within the stator and circumferentially around the rotational axis, that are electrically-driven by an external power source and associated controller.

A further embodiment comprises of a front and rear rotor assembly, out of rotational alignment to each other, comprising each of a rotating component composed of a ferromagnetic material with an circumferentially-segmented intermittent geometry, that in an odd segment composes predominantly a protrusion or detachable blade (installed on a non-ferromagnetic shaft-mounted disc) that completes said magnetic circuit inplane with the axis of rotation, and in an even segment composes the absence of that circuit. Note that here, the rotational alignment between the rotating blades and the stationary poles presents the aligned case, while the completely out of phase alignment represents the unaligned case. The embedding (into the design of the said stator halves) of minimal ferromagnetic material in between the said stator poles introduces this proven effective way of boosting unaligned induction (and thus of saliency ratio), so necessary to increase motor performance, that is not conventionally present by design in both axial-flux nor radial-flux motors.

An enclosing embodiment is the addition of a front and rear cover, one on either side of the said interconnected modules, statically connecting them to the vehicle interface and/or mount of the load-receiving machine. Also a connecting embodiment is the introduction of a shaft, on to which the front and rear rotor assemblies are mounted and rotational-interlocked via dedicated saliencies and/or grooves, that mechanically gears the rotor to the transmission axle of the vehicle and/or load-receiving machine. As a linked embodiment, the physical and rotary motion connecting the said covers to the said shaft comprises of a front and rear bearings, whose outer racing surface is stationary and locked to the front and rear covers, and whose inner racing surface is rotational-free to turn with said shaft.

A more specific embodiment comprises of a SRM whose rotor assemblies have ferromagnetic blades whose main body has a predominantly radial constant thickness, removing the possibility of creating a magnetic bottle neck or choke point that would otherwise restrict the magnetic flux, ultimately potentially limiting the performance of the motor.

A further general embodiment comprises of embedding a wing on each of the said magnetic blades, so that with the natural rotation of the rotor assembly, the collective of wings inwardly draws environmental cool air that circulates and extracts heat from the windings, the rotor and the stator halves. A related embodiment further includes an alternate or additional cooling system that comprises of a front and rear shaft-mounted aerodynamic fan that also drives environmental air through the interior of the motor

An alternative general embodiment comprises of a SRM whose rotor assemblies have ferromagnetic blades thicker at the tip (than with respect to the rest of the main body), enabling an expansion (and thus relaxation) of the magnetic flux in the thicker part of said blades. In a related embodiment, the said ferromagnetic blade has preferentially a fir tree-shaped root, to more evenly distribute the root stresses expected from the rotational-induced high-inertial radial loads during normal and/or extreme motor operation.

An important embodiment comprises of a SRM whose rotor assemblies have a non-ferromagnetic vacuum blade occupying the space in between the ferromagnetic blades, encompassing within it (and in accordance to its definition) a hollow cavity enclosed in vacuum. The need being satisfied here is that of removing the presence of air as the material present in between rotor blades, effectively removing magnetic permeability when the rotor is out of alignment with the stator, and hence minimizing further unaligned induction. It is a preferred embodiment that said vacuum cavity is large enough to fill without interference the space simultaneously within the stator and in the vicinity of the windings

A related embodiment comprises of a SRM whose stator assembly includes in each of its identical halves at least one winding coiled in a concentrated manner, circumferentially around the rotational axis and within a slot-like feature of the stator, and radially located towards the inner region of the stator. A follow-on effective embodiment then comprises of at least one winding coiled in a concentrated manner, circumferentially around a generally circular group of non-ferromagnetic inserts disposed around the rotational axis, and located radially towards the outer region of the stator. In a further embodiment, said non-ferromagnetic inserts are shaped as thin cylinders. It is a further and consequential embodiment that the said electric windings may coil in a combined way, that is in a concentrated manner simultaneously around two regions of the stator, first in a slot-like feature of the stator radially located towards the inner region of the stator, and second around a generally circular group of non-ferromagnetic inserts disposed around the rotational axis radially located towards the outer region of the stator. Such disposition trivially boosts electromagnetic induction of the stator's ferromagnetic material during operation. A potential further embodiment is that the windings coil circumferentially in a distributed fashion radially along the stator pole-shaped segment, which would more uniformly electromagnetically load the stator's pole, while at the same time offer greater surface exposure for cooling of the wires.

It is also a highly relevant object of the present invention that the novel SRM is made as light-weighted a possible, made to be operated and manufactured in a simple manner, thus reducing costs and assuring reliability without compromising functionality. It is therefore an important object of the present invention to provide an SRM composed of one or multiple sets of modules grouped together forming a magnetic turbine that drives the fan of an aircraft's electrically-driven engine, and alternatively that forms an engine that drives a ground-based electric vehicle.

**EP 4 583 367 A1**

### LIST OF FIGURES

Embodiments of the invention are described exemplary in the following figures.

FIG. **1A PRIOR ART** shows a cross-sectional view of the prior art switched reluctance motor SRM2 and it's modified version the D-SRM

FIG. **1B PRIOR ART** shows the magnetic flux density distribution predicted by the 2D finite element magnetic model (FEMM) analysis conducted on the prior art electric motor SRM2 and D-SRM, during alignment

FIG. **1C PRIOR ART** shows the magnetic flux density distribution predicted by the 2D FEMM analysis conducted on the prior art electric motor SRM2 and D-SRM, during unalignment

FIG. **2A PRIOR ART** shows a three-dimensional perspective exploded view of the prior art electric motor D-SRM; with a zoom view of the stator's pole

FIG. **2B PRIOR ART** shows a three-dimensional half-model perspective view of the prior art electric motor D-SRM

FIG. **2C PRIOR ART** shows a three-dimensional half-model front view of the prior art electric motor D-SRM

FIG. **3 PRIOR ART** shows the graphic and tabular results for the 2D FEMM analysis conducted on the prior art electric motors SRM2 and D-SRM

FIG. **4** shows a three-dimensional perspective outer view of the novel electric motor MAG-T #1/#2

FIG. **5** shows a three-dimensional exploded view of the novel electric motor MAG-T #1

FIG. **6** shows a three-dimensional half-model perspective view of the two modules composing the novel electric motor MAG-T #1

FIG. **7** shows a three-dimensional perspective view of the assembly composed of the half-stator, with embedded inner and outer coils, including a cut zoom view of the insert holding the outer coils

FIG. **8** shows a three-dimensional perspective view of the normal-bladed rotor assembly, with a zoom view of the blade fir tree-shaped root

FIG. **9** shows a three-dimensional exploded perspective view of the assembly composed of the shaft, front and rear fans and front and rear bearings

FIG. **10** shows the magnetic flux density distribution predicted by the 2D FEMM analysis conducted on the novel electric motor MAG-T #1, when aligned and unaligned

FIG. **11** shows the graphic and tabular results for the 2D FEMM analysis conducted on the novel electric motor MAG-T #1

FIG. **12** shows a three-dimensional exploded view of the novel electric motor MAG-T #2

FIG. **13** shows a three-dimensional half-model perspective view of the two modules composing the novel electric motor MAG-T #2

FIG. **14** shows a three-dimensional perspective view of the hammer-bladed rotor assembly, with a zoom view of the blade roots and vacuum chamber

FIG. **15** shows the magnetic flux density distribution predicted by the 2D FEMM analysis conducted on the novel electric motor MAG-T #2, when aligned and unaligned

FIG. **16** shows the graphic and tabular results for the 2D FEMM analysis conducted on the electric motor MAG-T #2

6

FIG. **17** illustrates the integration of the invention on an aircraft's electrically-driven engine, including a graph predicting the power scaling with size

**REFERENCE LIST**

**100** electric motor SRM2
**105** axial-looped winding
**106** hexagonal layout
**109** rotational axis
**110** stator
**120** air cavity
**121** rotor
**130** shaft
**131** surrounding air
**140** SRM2 strong CCW magnetic loop
**141** SRM2 strong CW magnetic loop
**145** SRM2 measurement #1
**146** SRM2 measurement #2
**147** SRM2 measurement #3
**148** SRM2 measurement #4
**150** SRM2 weak CCW magnetic loop
**151** SRM2 weak CW magnetic loop
**155** SRM2 measurement #5
**156** SRM2 measurement #6
**170** SRM2 rotor's pole
**175** SRM2 stator's pole
**200** electric motor D-SRM
**210** dual-sided stator
**221** dual-sided rotor
**222** rotor inner ring
**223** rotor outer ring
**224** ring connectors
**230** inner geared shaft
**240** D-SRM strong CCW magnetic loop
**241** D-SRM strong CW magnetic loop
**245** D-SRM measurement #7
**246** D-SRM measurement #8
**247** D-SRM measurement #9
**248** D-SRM measurement #10
**250** D-SRM weak CCW magnetic loop
**251** D-SRM weak CW magnetic loop
**255** D-SRM measurement #11
**256** D-SRM measurement #12
**260** back bearing
**261** front bearing
**270** inner D-SRM rotor pole
**271** outer D-SRM rotor pole
**272** outer pole surface
**273** inner pole surface
**275** D-SRM stator's pole
**276** front pole opening
**277** rear pole opening
**280** outer gap
**281** inner gap
**290** rotor locking groove
**291** axle connecting teeth

**300** electric motor MAG-T #1
**301** front cover
**302** rear cover
**303** cover attachment holes
**304** vehicle interface holes
**305** cooling air inlets
**306** hot air outlets
**308** MAG-T #1 module
**309** module attachment holes
**310** stator's half
**311** vertical gap
**312** horizontal gap
**315** circumferential-coiled outer winding
**316** circumferential-coiled inner winding
**317** Finite Element Magnetic model (FEMM) plane
**318** mid-radial arc length
**320** front normal-bladed rotor assembly
**321** rear normal-bladed rotor assembly
**323** MAG-T #1 aligned CCW magnetic loop
**324** MAG-T #1 aligned CW magnetic loop
**325** MAG-T #1 unaligned CCW magnetic loop
**326** MAG-T #1 unaligned CW magnetic loop
**330** geared central shaft
**335** outer pole holes
**336** winding gap
**337** inner stator's half pole
**338** stator's half recess
**339** non-ferromagnetic insert
**340** front fan
**341** rear fan
**342** locking groove
**343** fan blades
**344** fan shroud
**345** fan casing
**350** rear rotor disc
**351** front rotor disc
**352** normal magnetic blade
**353** cooling wing
**354** blade main body
**355** fir tree-shaped root
**360** rear bearing
**361** front bearing
**362** bearing's inner race surface
**363** bearing's outer race surface
**364** rotor disc grooves
**365** side cover plate
**366** blade tip
**370** MAG-T ttlstator's pole
**371** connecting ring segment
**372** inner magnetic interface
**373** outer magnetic interface
**374** half stator's attachment hole
**380** MAG-T #1 measurement #1
**381** MAG-T #1 measurement #2
**382** MAG-T #1 measurement #5
**389** ring protrusion
**390** fan's shaft protrusions
**391** axle connecting teeth

**392** rotor's shaft protrusions
**393** shaft's inner axial step
**394** shaft's outer axial step
**400** electric motor MAG-T #2
**408** MAG-T #2 module
**413** hammer lateral head gap
**420** front hammer-bladed rotor assembly
**421** rear hammer-bladed rotor assembly
**450** vacuum blade
**451** vacuum chamber
**452** hammer magnetic blade
**453** hammer blade's head
**454** hammer blade main body
**455** hammer fir tree-shaped root
**456** vacuum blade main body
**457** dovetail-shaped root
**460** MAG-T #2 measurement #3
**461** MAG-T #2 measurement #4
**462** MAG-T #2 measurement #6

## DETAILED DESCRIPTION OF THE PREFERRED EMBODIMENTS

Hereinafter, the preferred embodiments of the present invention are further detailed along side accompanied reference to the appropriate drawings.

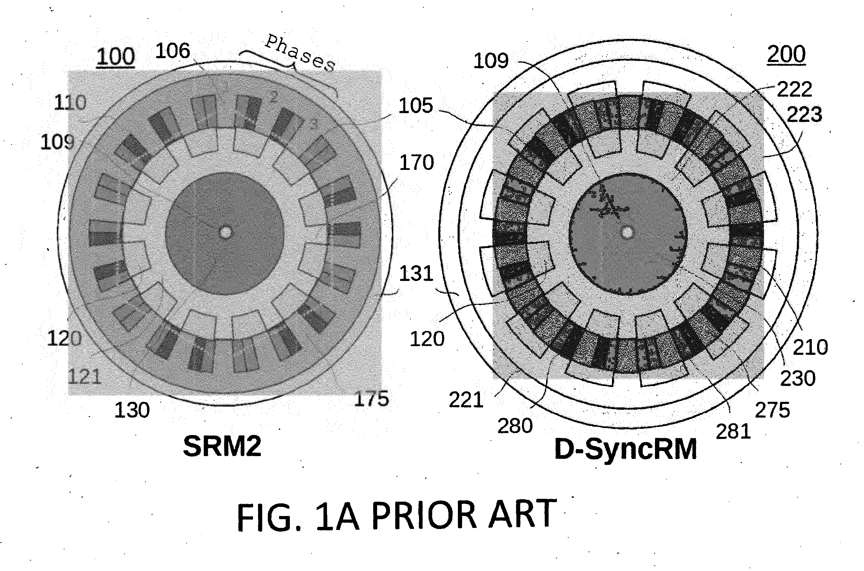

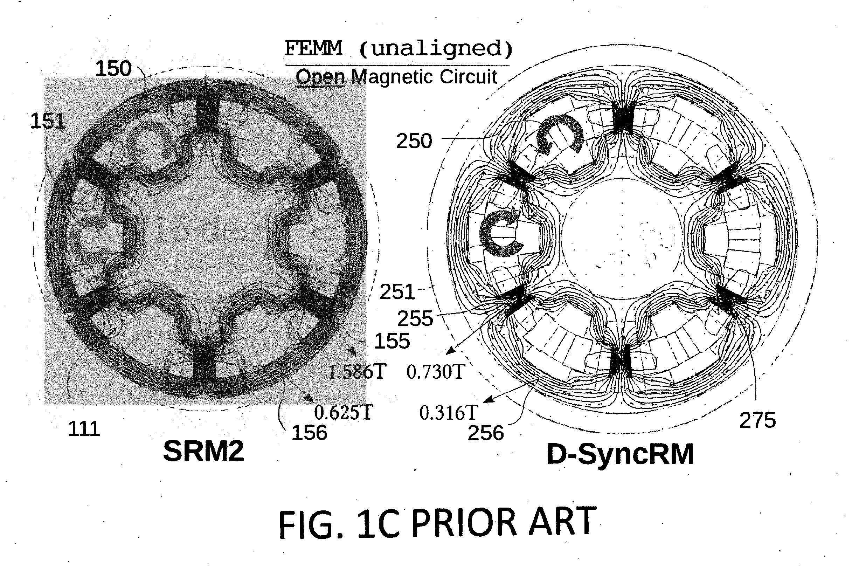

FIG. 1A shows a comparison between the already existing synchronous reluctance electric motor SRM2 **100** and its evolution the electric motor D-SRM **200**. The two-dimensional axial mid-section cutout of the electric motor SRM2 **100** in FIG. 1A shows a traditional architecture for this type of motor, being composed of a stator **110**, a rotor **121**, and a shaft **130**, while being enclosed in surrounding air **131** (important point for the finite element magnetic model FEMM analysis to be discussed later). Electric wires are coiled around each SRM2 stator's pole **175** forming axially-looped windings **105** (i.e., or loops winded along the motor rotational axis). Three groups of electrically-linked and axially-looped windings **105** disposed in a regular hexagonal layout **106** around the motor rotational axis **109**, creating six angular equidistant electromagnetic poles. All six axially-looped windings **105** are activated simultaneously in phase, and each group is activated in series creating a rotating magnetic field. These groups of axially-looped windings **105** are driven by a power bus and controller operating based on the Pulse Width Modulation scheme (not shown). The electric motor D-SRM **200** (also shown as a two-dimensional axial mid-section cutout) is a recently published evolutionary breakthrough from the electric motor SRM2 **100**, in that it shares practically the same components as the electric motor SRM2 **100**, except that it splits the stator **110** circumferentially at the most radial outer extremity of the axially-looped windings **105** (i.e., radially outer of the stator's pole **175**), and re-assigns that outer portion of the stator **110** to the rotor **121**. As a result, the dual-sided rotor **221** has both a rotor inner ring **222** and a rotor outer ring **223**, while the stator **110** was reduced to its poles, hence forth termed the dual-sided stator **210**.

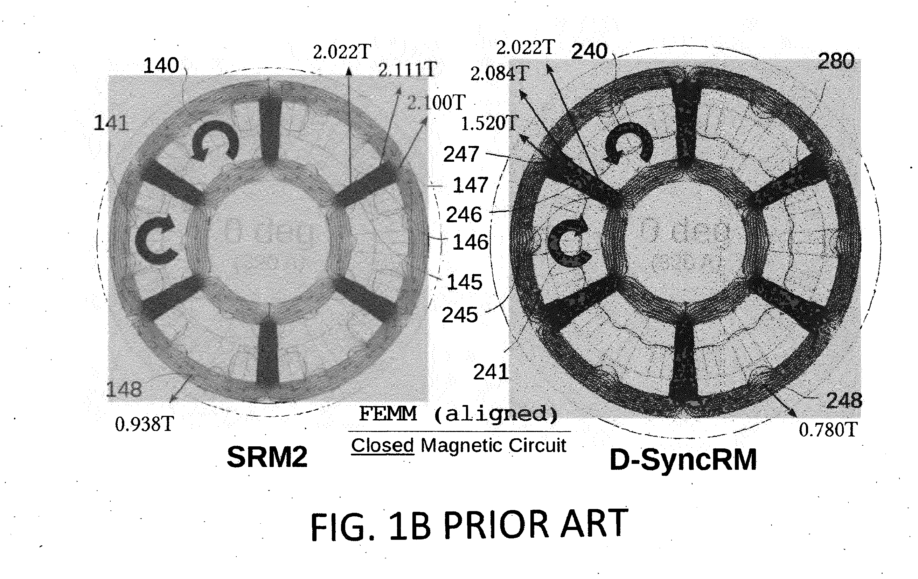

The results for the 2D FEMM analysis are shown back-to-back for the case when the stator and rotor of both the electric motor SRM2 **100** and the electric motor D-SRM **200** are aligned in FIG. 1B. Contour plots showing magnetic flux density values are presented. The greyscale colormap ranges from 0T to 2.1T, and is the same for all FEMM results presented in this invention. Vector plots are superimposed to determine magnetic flux direction and magnitude. Both electric motor SRM2 **100** and electric motor D-SRM **200** show that each hexagonal corner has two strong loops rotating in opposite manner (that is, a SRM2 strong CCW magnetic loop **140**, a SRM2 strong CW magnetic loop **141**, a D-SRM strong CCW magnetic loop **240**, and a D-SRM strong CW magnetic loop **241**). Several measurements of the predicted magnetic flux-density throughout the magnetic circuit provide an insight on how design modifications and rotor position are affecting the motor's capability to produce torque. The magnetic flux density at the **SRM2** rotor pole **170** and inner D-SRM rotor pole **270** is the same (i.e., both SRM2 measurement #1 **145** and D-SRM measurement #7 **245** 2.022T), and the flux is almost the same between the SRM2 stator's pole **175** and D-SRM stator's pole **275** (i.e., SRM2 measurement #2 **146** shows 2.111T and D-SRM measurement #8 **246** shows 2.084T). However, the magnetic flux density beyond the outer gap **280** of the electric motor D-SRM **200** at the outer D-SRM rotor pole **271** (i.e., D-SRM measurement #9 **247** showing 1.520T) is somewhat lower than the equivalent position of the electric motor SRM2 **100** (i.e., SRM2 measurement #3 **147** showing 2.100T). As a consequence, this slightly reduces the strength of the D-SRM strong CCW magnetic loop **240** with respect to SRM2 strong CCW magnetic loop **140** as shown by the outer section predictions (i.e., the D-SRM measurement #10 **248** with 0.780T against SRM2 measurement #4 **148** shows 0.938T). The same applies to the D-SRM strong CW magnetic loop **241** with respect to SRM2 strong CW magnetic loop **141**. As a conclusion, the overall comparison between the electric motor SRM2 **100** and electric motor D-SRM **200** shows that the design change caused an undesired small drop of flux intensity due to the presence of an additional gap (resulting in a predicted small negative impact on torque production and power conversion; these are quantified later).

The results for the 2D FEMM analysis are shown back-to-back for the case when the stator and rotor of both the electric motor SRM2 **100** and the electric motor D-SRM **200** are unaligned in FIG. 1E. Poles are completely unaligned forming between them an angle of 15 degrees. The same magnetic circuits appears at each hexagonal corner for both motors, encompassing a SRM2 weak CCW magnetic loop **150** (and its counterpart, the SRM2 weak CW magnetic loop **151**) plus a D-SRM weak CCW magnetic loop **250** (and its counterpart, the D-SRM weak CW magnetic loop **251**). The magnetic flux density at the stator's pole **275** of the electric motor D-SRM **200** (i.e., D-SRM measurement **#5 255** showing 0.730T) is substantially lower than that at the stator's pole **111** of the electric motor SRM2 **100** (i.e., SRM2 measurement **#11155** showing 1.586T). As a consequence, this substantially reduces the strength of the D-SRM weak CCW magnetic loop **250** with respect to SRM2 weak CCW magnetic loop **150** as shown by the outer section predictions (i.e., the D-SRM measurement #12 **256** with 0.316T against SRM2 measurement #6 **156** shows 0.625T). As a conclusion, the overall comparison between the electric motor SRM2 **100** and electric motor D-SRM **200** shows that the design change caused a desired large drop of flux intensity (resulting in a predicted large positive impact on torque production and power conversion; these are quantified later).

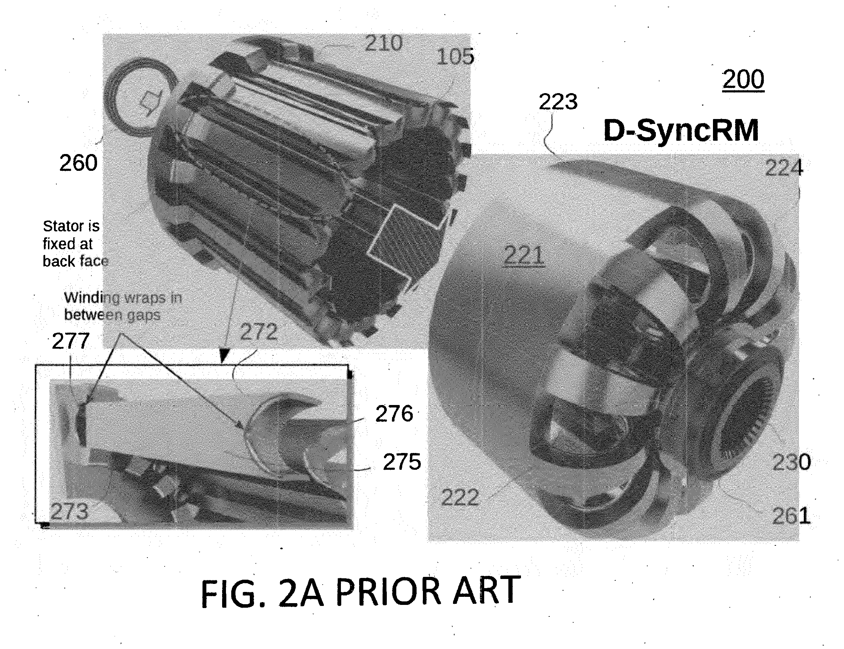

FIG.2A shows an exploded view of the prior art electric motor D-SRM **200** that illustrates a potential method of assembly. The rear bearing **260** is slided inside the stator **210**, with the outer race being fixed to it. As the zoom shows, the windings are coiled in the front pole opening **276** and rear pole opening **277** at either side and around the D-SRM stator's pole **275**. Several ring connectors **224** structurally link the rotor inner ring **222** to the rotor outer ring **223**. The inner geared shaft **230** is slided inside the dual-sided rotor **221** from the side opposing the ring connectors **224**. Then, the front bearing **261** is slided at the front end of the inner geared shaft **230**, with the inner race being fixed to the inner geared shaft **230**. The outer race of the front bearing **261** is connected to the fixed structure of the electric vehicle and/or load-bearing machine (not shown). The assembly of the inner geared shaft **230** along with the dual-sided rotor **221** plus front bearing **261** is then slided into the stator **210** such that both the inner geared shaft **230** slides inside the inner racing of the rear bearing **260**, and the ensemble of D-SRM stator's pole **275** fits into the space in between the rotor outer ring **223** and rotor inner ring **222**.

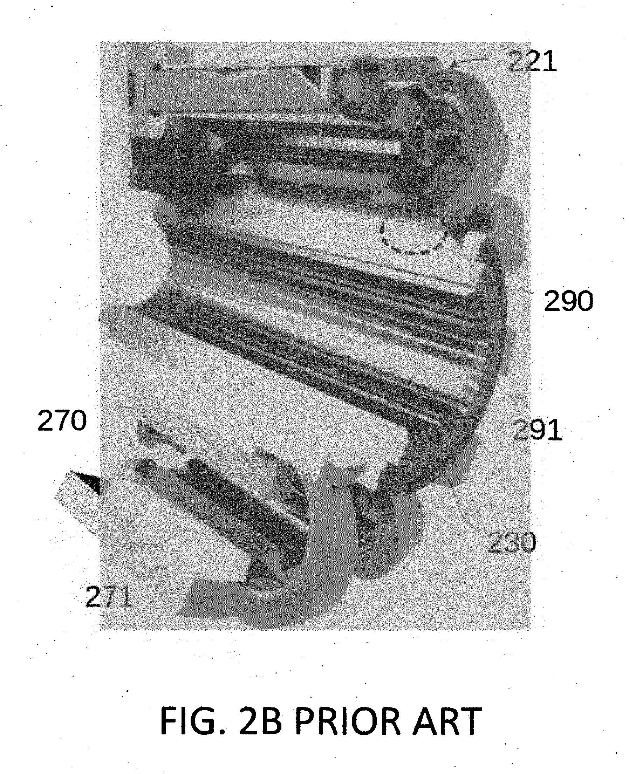

FIG.2B shows a perspective view of half of the prior art electric motor D-SRM **200.** The dual-sided rotor **221** is both partial-translational and total-rotational locked by the rotor grooves **290**. The inner rotor pole **270** and outer rotor pole **271** are also here more clearly visible. The inner geared shaft **230** transmits the torque to the vehicle and/or load-bearing machine via (internal) axle connecting teeth **291**.

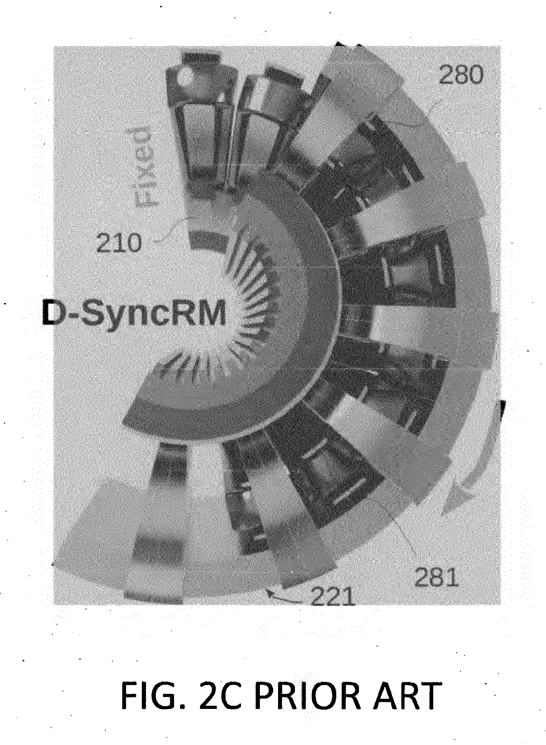

FIG.2C shows a front view of half of the prior art electric motor D-SRM **200.** The rotation of the dual-sided rotor **221** around and holding within the dual-sided stator **210** (that is fixed) is here more clearly visible. Also the location of both the outer gap **280** and the inner gap **281** formed between the dual-sided stator is also here perceived.

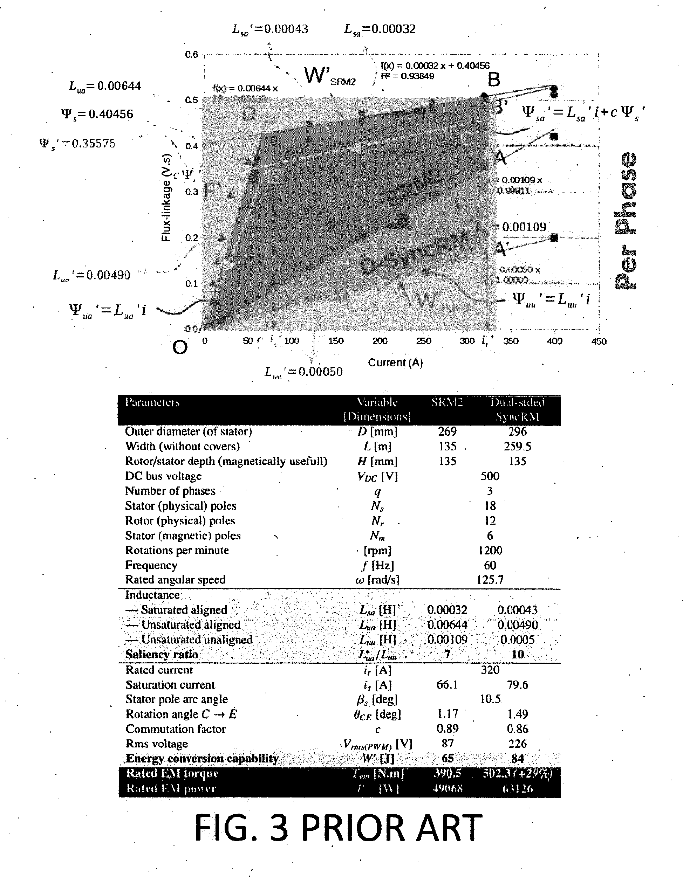

FIG.3 shows the flux-linkage response with varying current for both electric motor SRM2 **100** and the prior art electric motor D-SRM **200.** Four lines define the operational cycle of one segment rotation of the motor. For the electric motor SRM2 **100**, line OA represents the current ramp-up when the rotor is unsaturated and unaligned. Then line AB represents the part of cycle when the phase reached the operational current rating, and flux-density increases as the magnetic circuit intensifies towards saturation. Subsequent line BD denotes the current ramp down, as both saturation and alignment occurs. Finally, line DO denotes the demagnetization of the circuit (often by inverting the voltage), reducing both the flux-intensity and current towards zero. This cycle results in the quadrilateral OABD. For the prior art electric motor D-SRM **200**, FEMM simulations showed the resulting cycle to be the quadrilateral OA'B'D'. The slope of each line measures the net induction of the magnetic circuit per phase. The area formed by the quadrilaterals OABD and OA'B'D' allows the computation of the magnitude of the energy conversion capability or co-energy W' for each respective motor. Commutation is employed to avoid production of negative torque (this means that the quadrilateral OA'B'D' becomes OA'C'E' for the electric motor D-SRM **200**). The graph distills into the data in the subsequent enclosed Table, resulting in the calculation of key performance parameters such the total electromagnetic power P provided by torque T at a rated angular speed $\omega$, and is given as

$$P = T \times \omega \qquad \text{with} \qquad T = \left( W' \times \frac{q \cdot N_r}{2\pi} \right) \times R$$

where $N_r$ is the number of physical poles of the rotor, and $q$ is the number of electric phases. The evolutionary design breakthrough of the prior art electric motor D-SRM **200** is predicted to have a torque of 502.3 N (and power of 63kW), representing an increased by 27% (with respect to the prior art electric motor SRM2 **100**), whilst also achieving a saliency ratio of 10 (against 7 for the electric motor SRM2 **100**) and an efficiency boost to 91% (at the rated operational speed of 1200rpm).

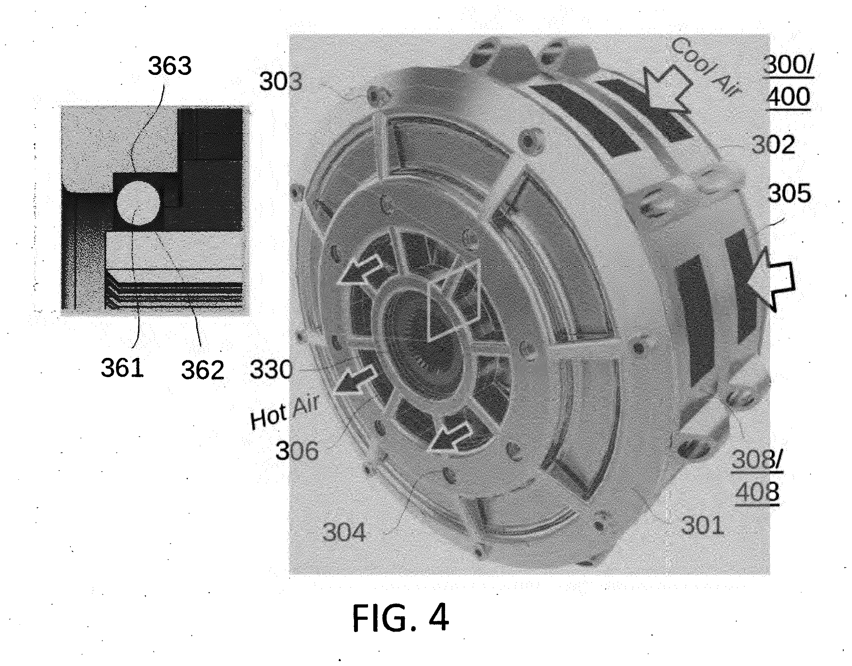

FIG.4 shows a perspective view of the proposed invention, the electric motor MAG-T #1 **300**. Note that since only the rotors are different between the two motor variants (and these are internal assemblies), the presented outer schematic is valid for both versions --- the electric motor MAG-T #1 **300** and electric motor MAG-T #2 **400**. The MAG-T #1 module **308** and MAG-T #2 module **408** (to be described later) are interconnected in parallel (with poles aligned), presenting on either side a front cover **301** and a rear cover **302**. The front cover **301** and rear cover **302** are attached to each MAG-T #1 module **308** via dedicated angular-equidistant cover attachment holes **303**. In turn, the electric motor MAG-T #1 **300** and electric motor MAG-T #2 **400** are secured via the (also angular-equidistant) vehicle interface holes **304**. An internal air-based cooling system operates by drawing air radially inwards via the cooling air inlet **305** surrounding the modules, and hot air is blown out axially outward via the hot air oulet **306**. Like the prior art electric motor D-SRM **200,** dedicated front bearing **361** and rear bearing **360** (not visible) connect the geared central shaft **330** (via the bearing's inner race surface **362**), and on either side to the front cover **301** and rear cover **302** (via the bearing's outer race surface **363**).

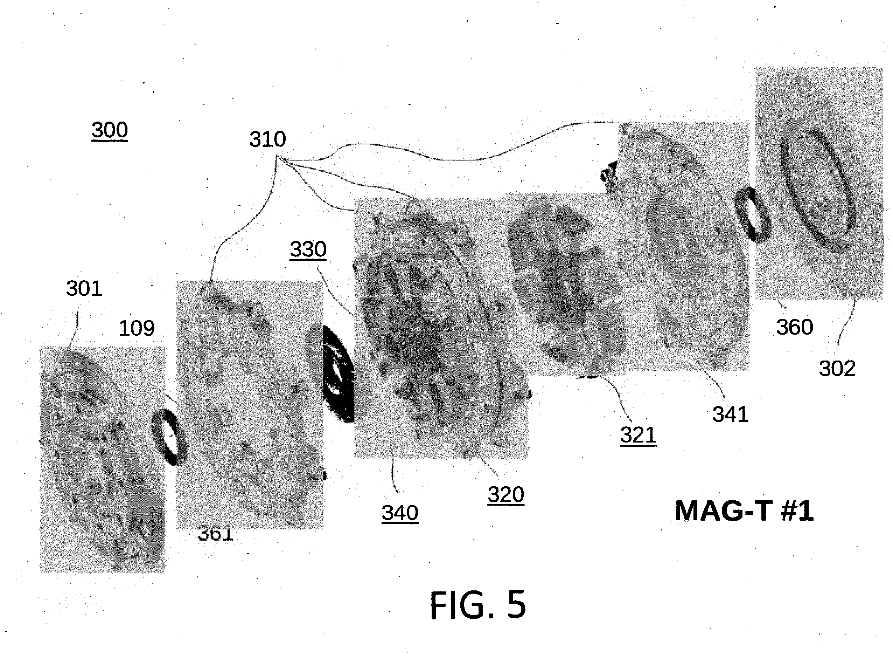

FIG.5 shows an exploded view of the novel electric motor MAG-T #1 **300**. It is practically symmetrical about the midplane (perpendicular to the rotational axis **109**), except that when the front rotor is aligned (to the respective stator), then the rear rotor is unaligned (and vice versa). Each MAG-T #1 module **308** is composed of two stator halves **310**, a front normal-bladed rotor assembly **320** and a front fan **340** (in the front module), while the rear module houses within a rear normal-bladed rotor assembly **321** and a front fan **341**. All rotating components within the MAG-T #1 modules **308** (beyond the front cover **301** and rear cover **302**, like the front bearing **361** and rear bearing **360**) sit on the geared central shaft **330** (this is similar in size to the inner geared shaft **230**, except that its locking protrusions are different from the prior rotor grooves **291**).

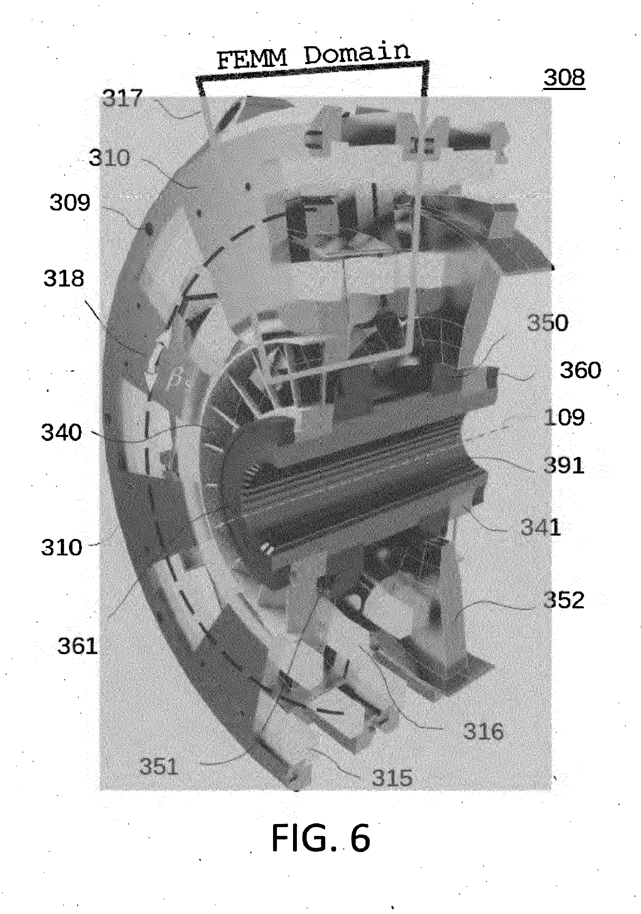

FIG.6 shows a perspective view of half of two MAG-T #1 modules **308** composing the novel electric motor MAG-T #1 **300**. In it is highlighted the domain of the finite element magnetic model (FEMM), comprising of a cross section of the stator pole. This cross-sectional FEMM plane **317** contains the magnetic circuits (typically formed by closed-loop streamlines of constant magnetic flux) and is colinear with the rotational axis **109** (i.e., the FEMM plane **317** fans out from the rotational axis **109**). The (equivalent) depth of the electric motor MAG-T #1 **300** is given by the circumferential arc length sum at mid-radial distance of the magnetic circuit, which in other words equates to eight times the mid-radial arc length **318** of a stator pole (which is also that of the rotor normal magnetic blade **352**). The stator pole arc angle $\beta_S$ is 22.5 degrees. Each module has within two circumferential-coiled inner windings **316**, and two circumferential-coiled outer windings **315**. That is, each stator's half **310** holds one of each windings within. The front bearing **361** and rear bearing **360** lock axially the front normal-bladed rotor assembly **320** and rear normal-bladed rotor assembly **321** in place.

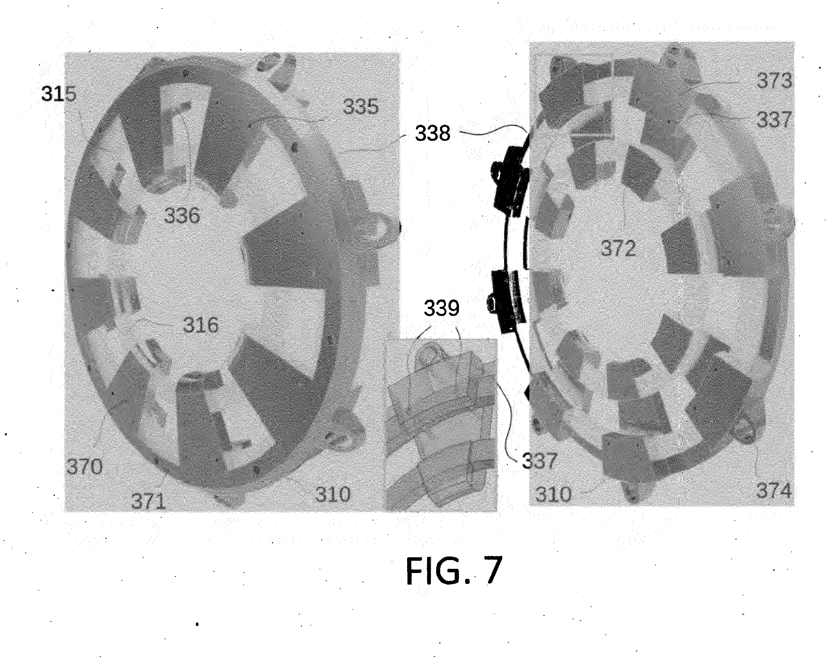

FIG.7 shows a perspective front view and rear view of the stator half **310** with the circumferential-coiled inner windings **316** and circumferential-coiled outer windings **315**, respectively. Non-ferromagnetic inserts **339** are slided through the outer pole holes **335** at the top of the stator's pole, crossing the stator's pole **370**, the winding gap **336** and into inside the inner half pole **337**. These non-ferromagnetic inserts **339**, made for instance of titanium or stainless steel, form the platform onto which the circumferential-coiled outer windings **315** are wounded, and are thus spatially held in place. Wires are coiled around the motor axis into circumferential-coiled outer windings **315** (positioned radially more outwards) and circumferential-coiled inner windings **316** (positioned radially more inwards), which is simpler to setup than the prior art axially-looped windings **105**. The stator's half recess **338** minimizes the amount of half stators ferromagnetic material exposed to both circumferential-coiled inner windings **316** and the circumferential-coiled outer windings **315** electromagnetic field during unalignment, thus reducing the respective unaligned inductance. Both stator's half **310** in a MAG-T #1 module **308** are secured to each other via the half stator's attachment holes **374**. Magnetically speaking, the stator's halves **310** connect to each other via both the inner magnetic interface **372** and the outer magnetic interface **373**. Magnetic insulation in between the modules can be achieved by inserting a non-ferromagnetic material (e.g. aluminum).

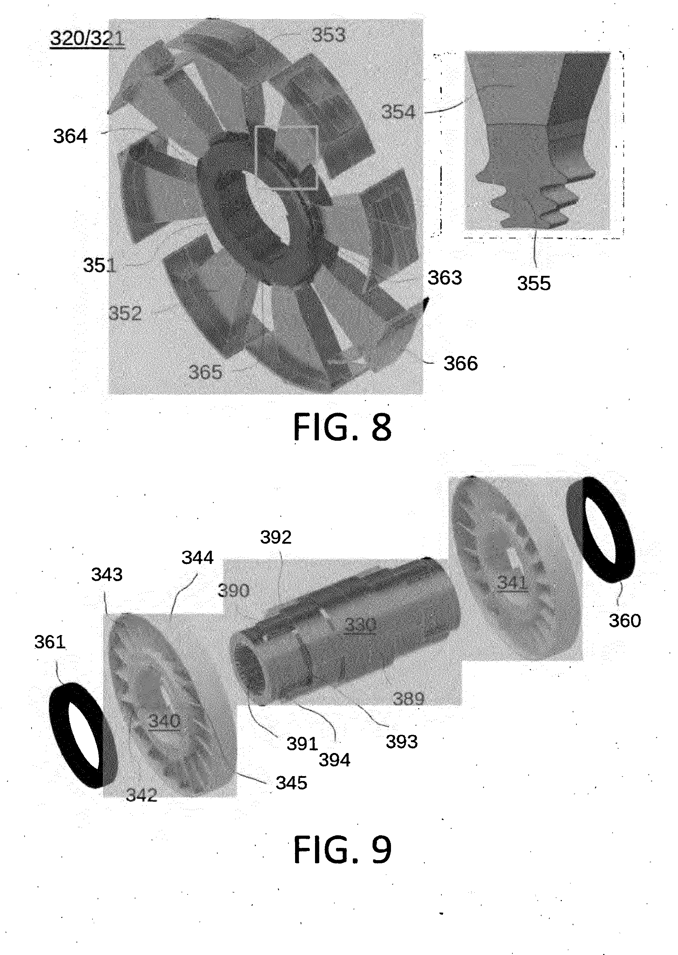

FIG.8 shows a perspective view of the front normal-bladed rotor assembly **320**, including a zoom of the fir tree-shaped root **355** of the normal magnetic blades **352**. The front normal-bladed rotor assembly **320** is composed of a front rotor disc **351** with a side cover plate **365**, and several normal magnetic blades **352**. The normal magnetic blades **352** are made of ferromagnetic material (like for example iron or steel) and have fir tree-shaped roots **355**, a main body **354** and a blade tip **366**. It is preferred that normal magnetic blades **352** have fir tree-shaped roots **355**, because then they are better capable of withstanding the high inertial loads expected during operation. Here, the factor $AN^2$ (where A is the annular area of the rotor magnetic blades, and N is the rotational speed) forms an indicator commonly used in aerospace industry for selection of material of appropriate strength. The normal magnetic blades **352** are slided from one side of the front rotor disc **351** into their corresponding fir tree-shaped slots (not shown). The front rotor disc **351** is made of non-ferromagnetic material (like for example aluminum or stainless steel) and has the function of holding the normal magnetic blades **352** in place as they spin around with the geared central shaft **330**. Once the normal magnetic blades **352** are in their respective slots, and thus restricted in their radial motion, they are further axially locked in placed via the side cover plate **365** (that is secured laterally onto the front rotor disc **351**). The normal magnetic blade **352** has, as one of its features, an inbuilt cooling wing **353** (which is radially above the main body **354**), which with the rotation of the front normal-bladed rotor assembly **320** draws air from the cooling air inlets **305** on the sides of the motor modules **308**, passing through both the circumferential-coiled outer windings **315** and circumferential-coiled inner windings **316** (effectively cooling them), and down towards the interior of the novel electric motor MAG-T #1 **300**.

FIG.9 shows the exploded view of the assembly composed of the geared central shaft **330**, front fan **340**, rear fan **341**, front bearing **361** and rear bearing **360**. The geared central shaft **330** has at its axial central region a ring protrusion **389** against which, the front rotor disc **351** locks axially from the front side, and the rear rotor disc **350** also locks axially from the rear side. To lock the rotational motion to the geared central shaft **330**, the front rotor disc **351** has three angular-equidistant rotor disc grooves **364** (shown in FIG.8) that slide into the respective three angular-equidistant rotor's shaft protrusions **392**. The same thing occurs to the rear rotor disc **350** from the rear side. The front fan **340** rotational locks via the fan's shaft protrusions **390**. Similarly, and subsequentially, the front fan **340** slides from the front side and locks axially against the shaft's inner axial step **393**, and likewise the rear fan **341** also locks axially from the rear side. Finally, the front bearing **361** slides on the geared central shaft **330** from the front side and locks against the shaft's outer axial step **394**. To lock the rotational motion to the geared central shaft **330**, the front fan **340** has three angular-equidistant rotor disc locking grooves **342** that slide into the respective three angular-equidistant rotor's shaft protrusions **390**. Moreover, the front fan **340** is composed of various fan blades **343** disposed around a fan casing **345**, and possessing a fan shroud **344**, to minimize tip aerodynamic leakages. The same thing occurs to the rear fan **341** from the rear side.

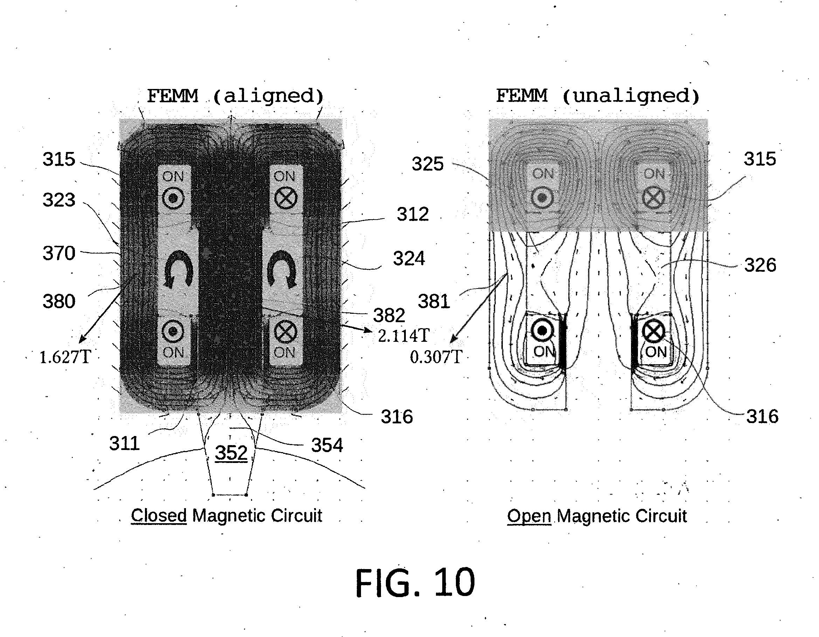

The results for the 2D FEMM analysis conducted on the electric motor MAG-T #1 **300** are shown in FIG. 10 for the cases when the stator pole **370** and normal magnetic blade **352** are aligned and unaligned. A novel layout of a magnetic circuit is presented (both for the aligned and unaligned cases), which is vertically symmetrical about the vertical midplane. Two strong loops rotating in opposite manner are visible for the aligned case (that is, a MAG-T #1 aligned CCW magnetic loop **323** and a MAG-T #1 aligned CW magnetic loop **324** are formed with a closed magnetic circuit), and two weak loops rotating in opposite manner are visible for the unaligned case (that is, a MAG-T #1 unaligned CCW magnetic loop **325** and a MAG-T #1 unaligned CW magnetic loop **326** are formed with an open magnetic circuit). The predicted magnetic flux performs a O-shaped loop around the coils (with predominantly radial flux), and crosses two stator-to-rotor gaps (i.e., one vertical gap **311** at the bottom, and one horizontal gap **312** at the top). The magnetic flux density at vertical midpoint of the half MAG-T #1 stator's pole **370** of the electric motor MAG-T #1 **300** (i.e., MAG-T#1 measurement #1 **380** showing 1.627T) is substantially higher than in the unaligned case (i.e., MAG-T#1 measurement #2 **381** showing 0.307T). Note that the peak magnetic flux density at the center of the normal magnetic blade **352** shown by MAG-T #1 measurement **#5 382** is 2.114T, which is comparable to both the SRM2 measurement #2 **146** showing 2.111T and D-SRM measurement **#8 246** showing 2.084T. Here, the coils crossectional area and size are the same as for the prior art electric motor SRM2 **100** and electric motor D-SRM **200**, and it is assumed that is driven by the same power bus and controller based on the Pulse Width Modulation scheme. The (equivalent) depth of the electric motor MAG-T #2 **400** is given by the circumferential arc length sum at mid-radial distance of the magnetic circuit, which in other words equates to eight times the mid-radial arc length **318** of a stator pole (which is also that of the rotor normal magnetic blade **352**). The stator pole arc angle $\beta_S$ is 22.5 degrees (shown in FIG.6).

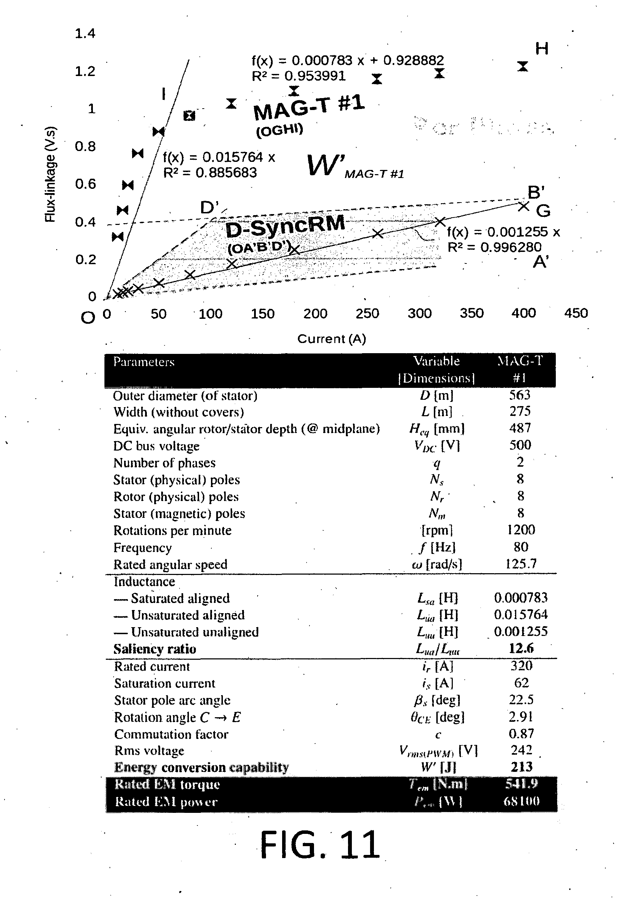

FIG.11 shows the flux-linkage response with varying current for the electric motor MAG-T #1 **300**, showing a new quadrilateral area OGHI formed by the new four lines. The covered area is much larger than that for the electric motor D-SRM **200**, nonetheless it is important to remember that this is per phase, and the fact that the electric motor MAG-T **#1 300** has two phases while the prior art electric motor D-SRM **200** has three phases, also plays a role. It is also important to remark that a much stepper flux-intensity response to applied current is seen for the novel electric motor MAG-T #1 **300,** all the way to saturation. This translates into a much faster acceleration of the rotor, and thus greater responsiveness. As before, the graph distills into new data in the subsequent enclosed Table, resulting in the calculation of key performance parameters such as torque and power. The novel electric motor MAG-T #1 **300** is predicted to have a torque of 541.9 N (and power of 68kW), representing an increase by 8% (with respect to the prior art electric motor D-SRM **200**), whilst also achieving a saliency ratio of 12.6 (at the rated operational speed of 1200rpm).

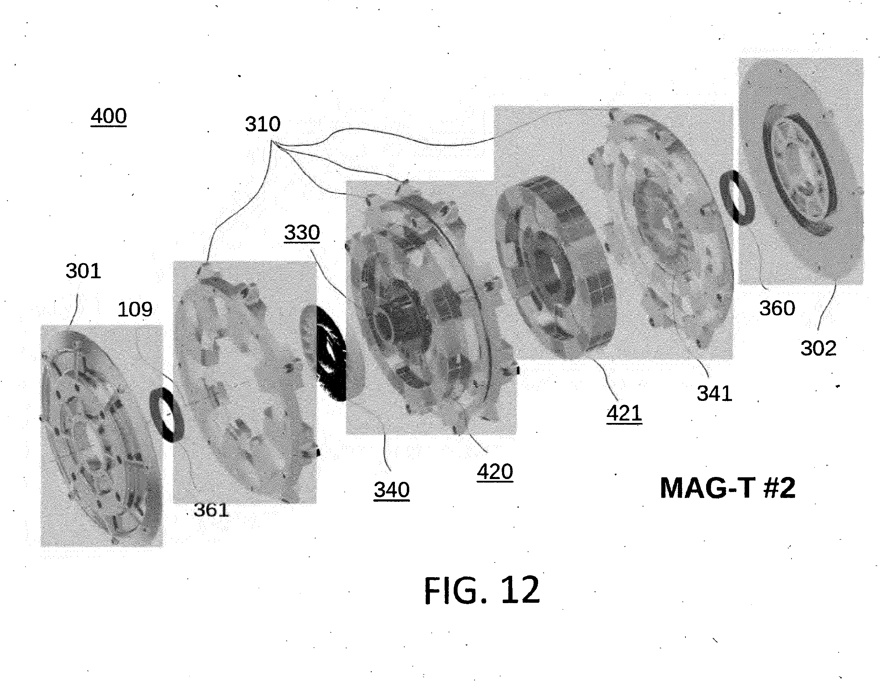

FIG.12 shows an exploded view of the novel electric motor MAG-T #2 **400**. The only difference comparing to the electric motor MAG-T #1 **300** in FIG.5 is that the front normal-bladed rotor assembly **320** and rear normal-bladed rotor assembly **321** have been replaced by the front hammer-bladed rotor assembly **420** and rear hammer-bladed rotor assembly **421**.

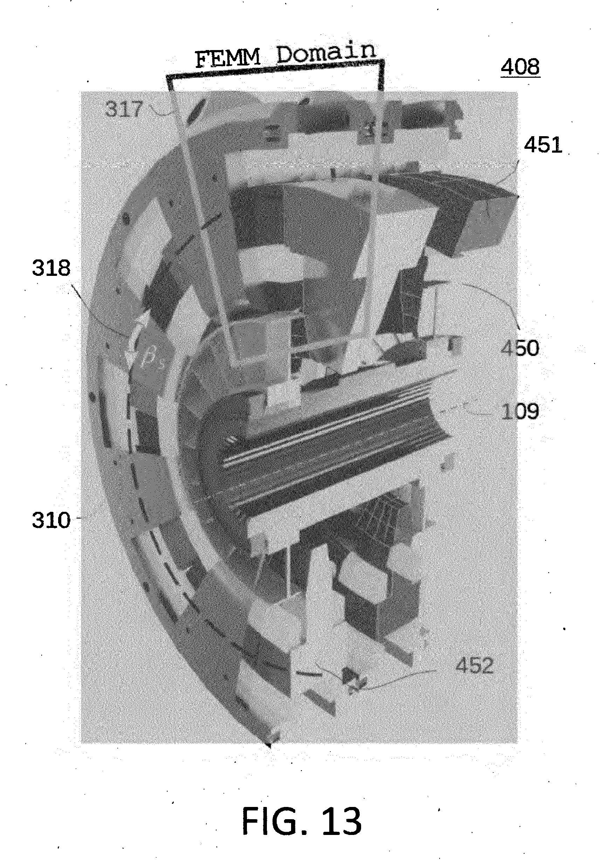

FIG.13 shows a perspective view of half of two MAG-T #2 modules **408** composing the novel electric motor MAG-T #2 **400**. The differences when comparing to the half model of the electric motor MAG-T #1 **300** in FIG.6 is that the normal magnetic blade **352** has been replaced by the hammer magnetic blade **452** (the name hammer reflects its overall shape), while the empty space circumferentially in between the normal magnetic blades **352** has been replaced with vacuum blades **450**. A vacuum blade **450** is a none-ferromagnetic (e.g., aluminum, as it is both strong and light-weighted) equivalent to the hammer magnetic blade **452,** except that by having a vacuum chamber **451** within, it induces the opposite magnetic effect. That is, while the hammer magnetic blade **452** closes and maximizes the magnetic circuit (boosting aligned induction), the vacuum blade **450** interrupts and effectively eliminates said magnetic circuit (drastically reducing unaligned induction). Here, due to space constraint, it is no possible to introduce the cooling wing **353**. The description conducted henceforth for the front hammer-bladed rotor assembly **420** is equally applicable to the rear hammer-bladed rotor assembly **421** (that is, the same explanation applies when the front rotor disc **351** is replaced by the rear rotor disc **350**, where the later is equal in shape but positioned in a different axial and rotational location than the front rotor disc **351**).

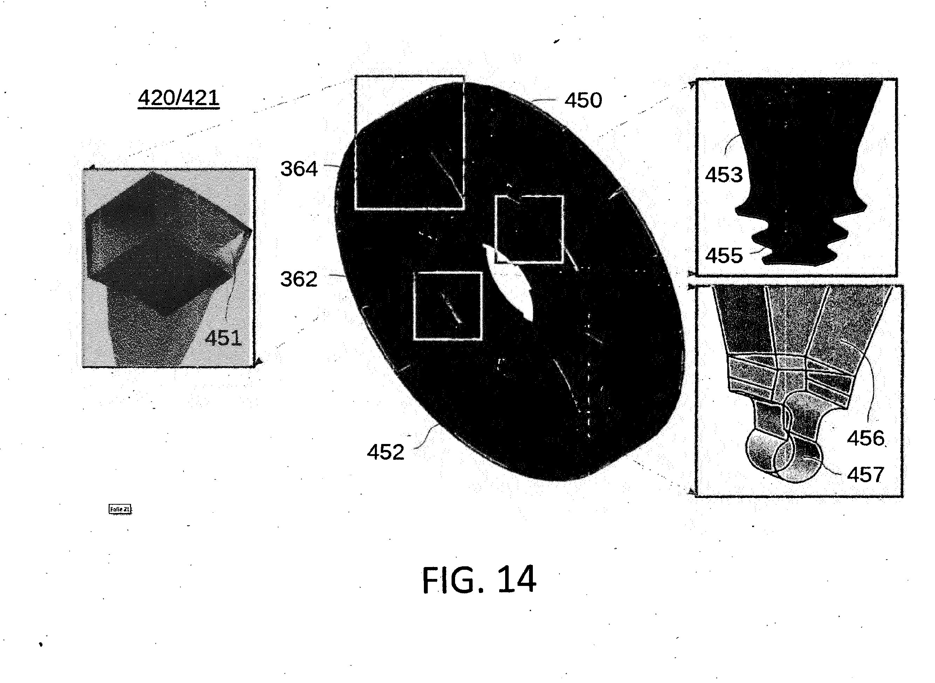

FIG.14 shows a perspective view of the front hammer-bladed rotor assembly **420**, including a zoom of the hammer fir tree-shaped root **455** of the hammer magnetic blades **452**, a zoom of the dovetail-shaped root **457** of the vacuum blades **450**, and a zoom of the vacuum chamber **451** at the vacuum blade's6 head **453**. The front rotor disc **351** with a side cover plate **365** is made of non-ferromagnetic material, holding both hammer magnetic blades **452** and vacuum blades **450** in place as they all spin around the geared central shaft **330**. Hammer magnetic blades **452** alternate vacuum blades **450** around the disc. Vacuum blades **450** are slotted axially from one side of the front rotor disc **351** into dedicated Dovetail slots (not visible). These shapes are recommendable to vacuum blades **450** due to their simplicity and because the vacuum blades **450** are lighter than hammer magnetic blades **452** (not requiring such a complex load-distributing interface, as that present in a hammer fir tree-shaped root **355** for example). Both hammer magnetic blades **452** and vacuum blades **450** are further axial-locked into place via the side cover plate **365**, which are secured laterally against the front rotor disc **351**. The outer cross-sectional contour of both the hammer magnetic blade **452** and vacuum blade **451** are inherently similar by design, allowing the front hammer -bladed rotor assembly **420** to spin with minimum aerodynamic interference or windage.

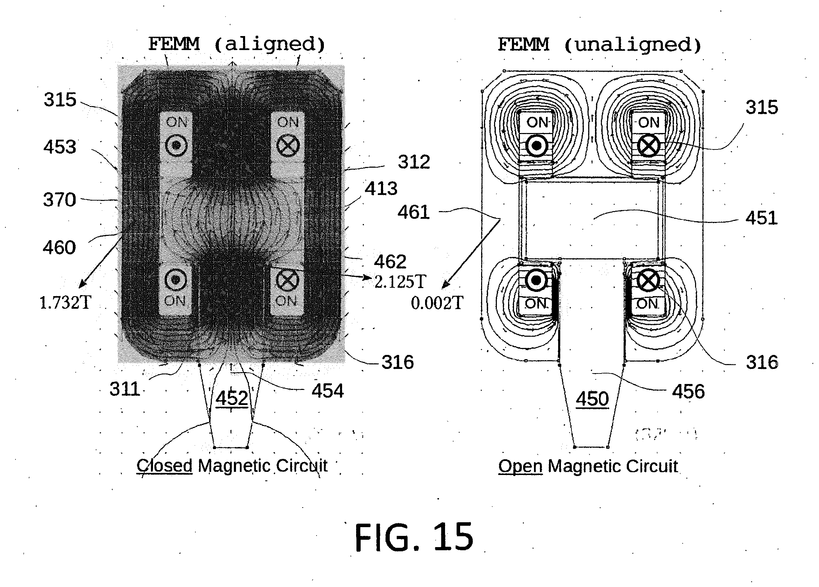

The results for the 2D FEMM analysis conducted on the electric motor MAG-T **#2 400** are shown for the cases when the stator pole **370** and hammer magnetic blade **452** are aligned and unaligned in FIG.15. The novel layout of a magnetic circuit is again present (this time only for the aligned case), which is vertically symmetrical about the vertical midplane. Two very strong loops rotating in opposite manner are visible for the aligned case, and no loops are present for the unaligned case. This is due to the presence of the vacuum blade **450**, whose vacuum chamber **451** interrupts the propagation of the loops. As before, in the aligned case the magnetic flux performs a O-shaped loop around the coils (with predominantly radial flux), and crosses two stator-to-rotor gaps (i.e., one vertical gap **311** at the bottom, and one horizontal gap **312** at the top). The hammer lateral head gap **413**, that is the gap between the hammer blade head and the stator, is larger (in this example, it has 1 mm) than the vertical gap 311 and horizontal gap **312** (i.e., in this example both have 0.5 mm), thus the preferred magnetic flux path is the aforementioned O-shaped loop. The predicted magnetic flux density at vertical midpoint of the half MAG-T #1 stator's pole **370** of the electric motor MAG-T #2 **400** (i.e., MAG-T #2 measurement #3 **460** showing 1.732T) is exceedingly higher than in the unaligned case (i.e., MAG-T #2 measurement #4 **461** showing 0.002T), which is a condition prone to the large production of torque and power conversion. Note that the peak magnetic flux density at the center of the hammer magnetic blade **452** shown by MAG-T #2 measurement #6 **462** is 2.125T, which is comparable to both the SRM2 measurement #2 **146** showing 2.111T and D-SRM measurement #8 **246** showing 2.084T. The coils crossectional area and size are the same as for the prior art electric motor SRM2 **100** and electric motor D-SRM **200**, and it is assumed that is driven by the same power bus and same controller based on the Pulse Width Modulation scheme.

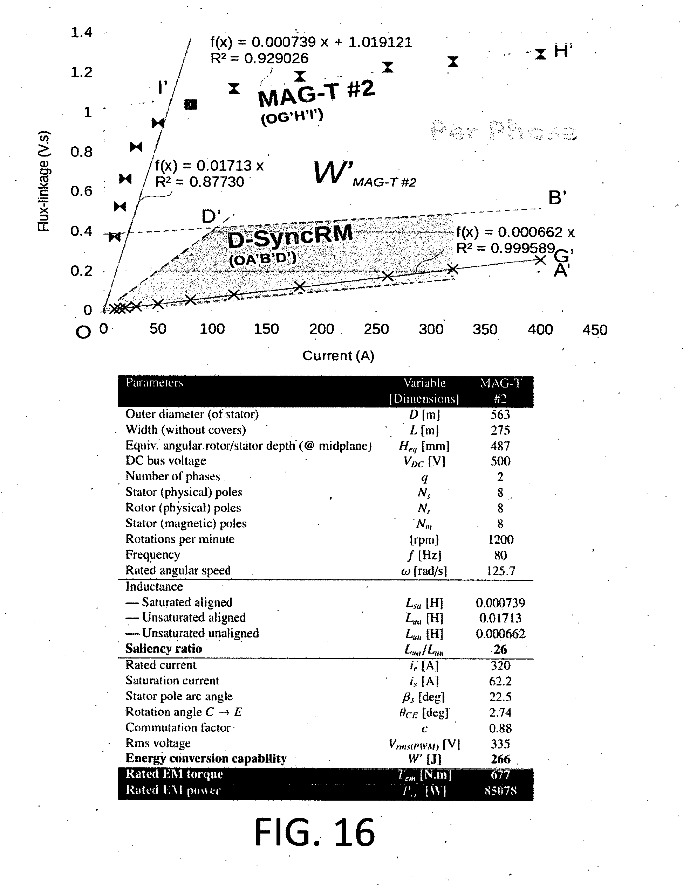

FIG.16 shows the flux-linkage response with varying current for the electric motor MAG-T #2 **400**, showing a new quadrilateral area OG'H'I' formed by the new four lines. The new covered area is even larger than that for the electric motor MAG-T #1 **300**, because the hammer magnetic blade **452** conducts more magnetic flux during rotor alignment (than the normal magnetic blade **352**) --- resulting in an even steeper flux-intensity response to applied current, thus moving the unsaturated aligned line OI to OI'--- while the vacuum blade reduces drastically the prior weak magnetic flux moving through air (as shown previously in FIG. 10) --- which further reduces the steepness of the unsaturated and unaligned line OG into OG'. This translates into an even faster acceleration response from the rotor, and thus greater responsiveness of the electric motor MAG-T #2 **400**. As before, the graph distills into new data in the subsequent enclosed Table, resulting in the calculation of key performance parameters such as torque and power. The novel electric motor MAG-T #2 **400** is predicted to have a torque of 677 N (and power of 85kW), representing an increase by 35% (with respect to the prior art electric motor D-SRM **200**), whilst also achieving a saliency ratio of 26 (at the rated operational speed of 1200rpm).

It is also important that the novel electric motor MAG-T #2 **400** (or its variant, the electric motor MAG-T #1 **300**) is made as light-weighted a possible, also made to be operated and manufactured in a simple manner, thus reducing costs and assuring reliability without compromising functionality. The novel electric motor MAG-T #2 **400** (or its variant, the electric motor MAG-T #1 **300**) composed of one or multiple sets of modules grouped together could form an engine that drives a ground-based electric vehicle.

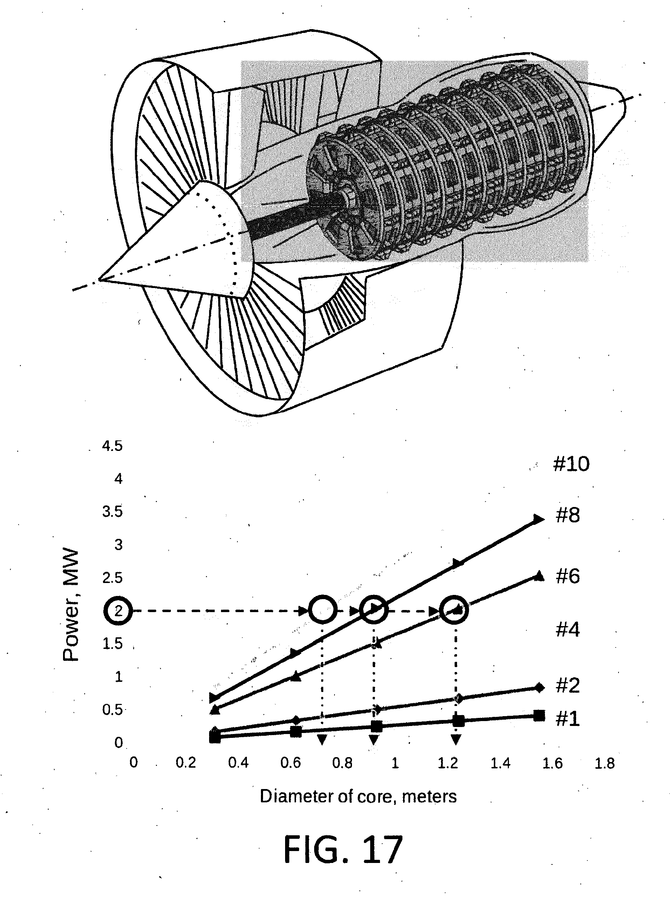

FIG.17 foresees the alternate application of the novel electric motor MAG-T **#2 400** composed of one or multiple sets of modules grouped together forming a magnetic turbine or core that drives the fan of an aircraft's electrically-driven engine. Assuming the magnetic circuit cross section (shown previously in FIG. 15) remains the same, and assuming that the equivalent depth increases linear with the core diameter, then the graph shown in FIG. 17 presents a linear extrapolation of how much power could be delivered by the parallel linking of several pairs of MAG-T #2 modules **408** (as presented previously in FIG. 13) holding various diameters. As an example, a target of 2MW (delivering a predicted torque of around 16kN, when turning at the original rated angular speed as in FIG. 16) could be delivered by the following combination of number of module pairs plus size: #6 pairs of MAG-T #2 modules **408** with diameter of around 1.25 meters; #8 pairs of MAG-T #2 modules **408** with diameter of around 0.94 meters; and #10 pairs of MAG-T #2 modules **408** with diameter of around 0.73 meters.

**Claims**

1. A switched reluctance electric motor composed of

a front and rear identical modules connected physically in parallel, holding within each module a stator assembly and a rotor assembly

a front and rear stator assembly, rotational aligned to each other, comprising each of a fixed component composed of a ferromagnetic material with a circumferential-segmented intermittent geometry, where an odd pole-shaped segment is composed by a portion of the material forming a magnetic circuit inplane with the axis of rotation, and an even segment is composed predominantly by the absence of said circuit-forming material, and whose stator crossection connects both the tip and either side of the rotor ferromagnetic blade

a front and rear rotor assembly, out of rotational alignment to each other, comprising each of a rotating component composed of a ferromagnetic material with an circumferentially-segmented intermittent geometry, that in an odd segment composes a protrusion in the form of a detachable blade slotted into a non-ferromagnetic shaft-mounted disc that completes said magnetic circuit inplane with the axis of rotation, and in an even segment composes predominantly the absence of said circuit-forming material

with the said magnetic circuits being inplane with the axis of rotation, and located at a given radial distance from said axis, whose magnetic flux is predominantly in the radial direction with the particularity of, said flux being axial as it crosses a vertical air-gap to enters said rotor blade and said flux being radial as it crosses a horizontal air-gap to exit said rotor blade

at least a pair of windings, one placed on either side of the said rotor blades, comprising of circumferential-coiled electrical conductors within the stator and around the rotational axis, that are electrically-driven with opposing phase from one rotor side to the other by an external power source and associated controller.

front and rear covers, one on either side of the said interconnected modules, statically connecting them to the vehicle interface and/or mount of the load-receiving machine

a shaft, on to which the front and rear rotor assemblies are mounted and rotational-locked via dedicated saliencies and/or grooves, that mechanically gears the rotor to the transmission axle of the vehicle and/or load-receiving machine

front and rear bearings, whose outer surface is stationary and locked to the front and rear covers, and whose inner surface is rotational-free to turn with said shaft

2. A switched reluctance electric motor according to claim 1, where said ferromagnetic blade has a main body with a radial constant thickness

3. A switched reluctance electric motor according to claim 2, where said magnetic blade has embedded a wing that from openings in said modules inwardly draws environmental cool air with the natural rotation of the rotor assembly

4. A switched reluctance electric motor according to claim 1, and further including a cooling system comprised of a front and rear shaft-mounted aerodynamic fan that drives environmental air through the interior of the motor

5. A switched reluctance electric motor according to claim 1, where the ferromagnetic blade has a main body thicker at the tip

6. A switched reluctance electric motor according to claim 1, where said ferromagnetic blade has preferentially a fir tree-shaped root

7. A switched reluctance electric motor according to claim 1, where the absence of that circuit-forming material is achieved via a non-ferromagnetic vacuum blade encompasses within, in accordance to its definition, a hollow cavity enclosed in vacuum

8. A switched reluctance electric motor according to claim 7, where said vacuum cavity is large enough to fill without interference the space simultaneously within the stator and in the vicinity of the windings

9. A switched reluctance electric motor according to claim 1, where at least one winding is coiled in a concentrated manner, circumferentially around the rotational axis and in a slot-like feature of the stator, whilst being located radially towards the inner region of the stator

10. A switched reluctance electric motor according to claim 1, where at least one winding is coiled in a concentrated manner, circumferentially around a generally circular group of non-ferromagnetic inserts disposed around the rotational axis, and located radially towards the outer region of the stator

11. A switched reluctance electric motor according to claim 10, where said non-ferromagnetic inserts are thin cylinders

12. A switched reluctance electric motor according to claim 1, where said windings are coiled in a concentrated manner simultaneously around two regions of the stator, first in a slot-like feature of the stator radially located towards the inner region of the stator, and second around a generally circular group of non-ferromagnetic inserts disposed around the rotational axis radially located towards the outer region of the stator

13. A switched reluctance electric motor according to claim 1, where the windings are coiled circumferentially in a radially-distributed manner vertically along the stator pole-shaped segment

14. A switched reluctance electric motor according to claim 1, composed of one or multiple sets of modules grouped together forming an electric motor that drives a ground-based electric vehicle

15. A switched reluctance electric motor according to claim 1, composed of one or multiple sets of modules grouped together forming a magnetic turbine that drives the fan of an aircraft's electrically-driven engine

**SRM2**

**D-SyncRM**

## FIG. 1A PRIOR ART

EP 4 583 367 A1

FIG. 1B PRIOR ART

FIG. 1C PRIOR ART

FIG. 2A PRIOR ART

FIG. 2B PRIOR ART

FIG. 2C PRIOR ART

FIG. 3 PRIOR ART

| Parameters | Variable [Dimensions] | SRM2 | Dual-sided SyncRM |
|---|---|---|---|
| Outer diameter (of stator) | $D$ [mm] | 269 | 296 |
| Width (without covers) | $L$ [m] | 135 | 259.5 |
| Rotor/stator depth (magnetically usefull) | $H$ [mm] | 135 | 135 |
| DC bus voltage | $V_{DC}$ [V] | | 500 |
| Number of phases | $q$ | | 3 |
| Stator (physical) poles | $N_s$ | | 18 |
| Rotor (physical) poles | $N_r$ | | 12 |
| Stator (magnetic) poles | $N_m$ | | 6 |
| Rotations per minute | [rpm] | | 1200 |
| Frequency | $f$ [Hz] | | 60 |
| Rated angular speed | $\omega$ [rad/s] | | 125.7 |
| Inductance | | | |
| — Saturated aligned | $L_{sa}$ [H] | 0.00032 | 0.00043 |
| — Unsaturated aligned | $L_{ua}$ [H] | 0.00644 | 0.00490 |
| — Unsaturated unaligned | $L_{uu}$ [H] | 0.00109 | 0.0005 |
| **Saliency ratio** | $L_{ua}^*/L_{uu}$ | **7** | **10** |
| Rated current | $i_r$ [A] | | 320 |
| Saturation current | $i_s$ [A] | 66.1 | 79.6 |
| Stator pole arc angle | $\beta_s$ [deg] | | 10.5 |
| Rotation angle $C \to E$ | $\theta_{CE}$ [deg] | 1.17 | 1.49 |
| Commutation factor | $c$ | 0.89 | 0.86 |
| Rms voltage | $V_{rms(PWM)}$ [V] | 87 | 226 |
| **Energy conversion capability** | $W'$ [J] | **65** | **84** |
| **Rated EM torque** | $T_{em}$ [N.m] | **390.5** | **502.3 (+29%)** |
| **Rated EM power** | $P$ [W] | **49068** | **63126** |

FIG. 4

300

310

301

109

330

361

340

320

321

341

360

302

MAG-T #1

FIG. 5

EP 4 583 367 A1

FIG. 6

FIG. 7

FIG. 8

FIG. 9

FEMM (aligned)

315
323
370
380

1.627T

ON ⊙          ON ⊗

⟲          ⟳

⊙ ON          ⊗ ON

312
324
381
382
2.114T
0.307T
316

311          352          354

Closed Magnetic Circuit

FEMM (unaligned)

325          315

ON ⊙          ON ⊗

⊙ ON          ⊗ ON

326

316

Open Magnetic Circuit

FIG. 10

EP 4 583 367 A1

$$f(x) = 0.000783 \, x + 0.928882$$
$$R^2 = 0.953991$$

MAG-T #1
(OGHI)

$$f(x) = 0.015764 \, x$$
$$R^2 = 0.885683$$

$W'_{MAG\text{-}T\,\#1}$

D-SyncRM
(OA'B'D')

$$f(x) = 0.001255 \, x$$
$$R^2 = 0.996280$$

| Parameters | Variable [Dimensions] | MAG-T #1 |
|---|---|---|
| Outer diameter (of stator) | $D$ [m] | 563 |
| Width (without covers) | $L$ [m] | 275 |
| Equiv. angular rotor/stator depth (@ midplane) | $H_{eq}$ [mm] | 487 |
| DC bus voltage | $V_{DC}$ [V] | 500 |
| Number of phases | $q$ | 2 |
| Stator (physical) poles | $N_s$ | 8 |
| Rotor (physical) poles | $N_r$ | 8 |
| Stator (magnetic) poles | $N_m$ | 8 |
| Rotations per minute | [rpm] | 1200 |
| Frequency | $f$ [Hz] | 80 |
| Rated angular speed | $\omega$ [rad/s] | 125.7 |
| Inductance | | |
| — Saturated aligned | $L_{sa}$ [H] | 0.000783 |
| — Unsaturated aligned | $L_{ua}$ [H] | 0.015764 |
| — Unsaturated unaligned | $L_{uu}$ [H] | 0.001255 |
| **Saliency ratio** | $L_{ua}/L_{uu}$ | **12.6** |
| Rated current | $i_r$ [A] | 320 |
| Saturation current | $i_s$ [A] | 62 |
| Stator pole arc angle | $\beta_s$ [deg] | 22.5 |
| Rotation angle $C \rightarrow E$ | $\theta_{CE}$ [deg] | 2.91 |
| Commutation factor | $c$ | 0.87 |
| Rms voltage | $V_{rms(PWM)}$ [V] | 242 |
| **Energy conversion capability** | $W'$ [J] | **213** |
| Rated EM torque | $T_{em}$ [N.m] | 541.9 |
| Rated EM power | $P_{em}$ [W] | 68100 |

# FIG. 11

400

310

301

109

330

361

340

420

421

341

360

302

MAG-T #2

FIG. 12

EP 4 583 367 A1

FIG. 13

420/421

451

364

362

452

450

453

455

456

457

FIG. 14

FIG. 15

$f(x) = 0.000739 \, x + 1.019121$
$R^2 = 0.929026$

MAG-T #2
(OG'H'I')

$f(x) = 0.01713 \, x$
$R^2 = 0.87730$

$W'_{MAG-T \#2}$

B'

D-SyncRM
(OA'B'D')

$f(x) = 0.000662 \, x$
$R^2 = 0.999589$

G'

A'

Flux-linkage (V.s)

Current (A)

| Parameters | Variable [Dimensions] | MAG-T #2 |
|---|---|---|
| Outer diameter (of stator) | $D$ [m] | 563 |
| Width (without covers) | $L$ [m] | 275 |
| Equiv. angular rotor/stator depth (@ midplane) | $H_{eq}$ [mm] | 487 |
| DC bus voltage | $V_{DC}$ [V] | 500 |
| Number of phases | $q$ | 2 |
| Stator (physical) poles | $N_s$ | 8 |
| Rotor (physical) poles | $N_r$ | 8 |
| Stator (magnetic) poles | $N_m$ | 8 |
| Rotations per minute | [rpm] | 1200 |
| Frequency | $f$ [Hz] | 80 |
| Rated angular speed | $\omega$ [rad/s] | 125.7 |
| Inductance | | |
| — Saturated aligned | $L_{sa}$ [H] | 0.000739 |
| — Unsaturated aligned | $L_{ua}$ [H] | 0.01713 |
| — Unsaturated unaligned | $L_{uu}$ [H] | 0.000662 |
| **Saliency ratio** | $L_{ua}/L_{uu}$ | **26** |
| Rated current | $i_r$ [A] | 320 |
| Saturation current | $i_s$ [A] | 62.2 |
| Stator pole arc angle | $\beta_s$ [deg] | 22.5 |
| Rotation angle $C \rightarrow E$ | $\theta_{CE}$ [deg] | 2.74 |
| Commutation factor | $c$ | 0.88 |
| Rms voltage | $V_{rms(PWM)}$ [V] | 335 |
| **Energy conversion capability** | $W'$ [J] | **266** |
| **Rated EM torque** | $T_{em}$ [N.m] | **677** |
| **Rated EM power** | $P_{em}$ [W] | **85078** |

# FIG. 16

FIG. 17

**EUROPEAN SEARCH REPORT**

Europäisches Patentamt
European Patent Office
Office européen des brevets

Application Number

EP 24 40 3201

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 195 24 543 A1 (HILL WOLFGANG [DE]) 9 January 1997 (1997-01-09) | 1-6,9, 13-15 | INV. H02K1/24 |
| A | * column 1, line 46 - line 48 *  * column 2, line 34 - column 3, line 5 *  * figures 1-3 * | 7,8, 10-12 | H02K16/02 H02K19/10 H02K1/14 |
| Y | US 2010/295389 A1 (TESSIER LYNN P [CA] ET AL) 25 November 2010 (2010-11-25) * figure 1 * | 1-6,9, 13-15 | ADD. H02K7/14 H02K9/06 |
| A | CN 204 231 046 U (ZHEJIANG XUNHE MACHINERY MANUFACTURE CO LTD) 25 March 2015 (2015-03-25) * figure 1 * | 1 | |
| Y | JP S51 45704 A (HITACHI LTD) 19 April 1976 (1976-04-19) | 6 | |
| A | * figures 2-4 * | 1 | |

TECHNICAL FIELDS SEARCHED (IPC)

H02K

The present search report has been drawn up for all claims

| Place of search | Date of completion of the search | Examiner |
|---|---|---|
| The Hague | 23 June 2024 | Dragojlovic, Djordje |

EPO FORM 1503 03.82 (P04C01)

**ANNEX TO THE EUROPEAN SEARCH REPORT
ON EUROPEAN PATENT APPLICATION NO.**                    EP 24 40 3201

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2024

| Patent document cited in search report | | Publication date | Patent family member(s) | | Publication date |
|---|---|---|---|---|---|
| DE 19524543 | A1 | 09-01-1997 | CN | 1189928 A | 05-08-1998 |
| | | | DE | 19524543 A1 | 09-01-1997 |
| | | | EP | 0836759 A1 | 22-04-1998 |
| | | | WO | 9702643 A1 | 23-01-1997 |
| US 2010295389 | A1 | 25-11-2010 | CA | 2549882 A1 | 12-12-2007 |
| | | | CA | 2654321 A1 | 21-12-2007 |
| | | | US | 2010295389 A1 | 25-11-2010 |
| | | | WO | 2007143827 A1 | 21-12-2007 |
| CN 204231046 | U | 25-03-2015 | NONE | | |
| JP S5145704 | A | 19-04-1976 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170110943 A, Tong
- US 20050110355 A, Sakuma
- US 3671789 A, Menzies
- US 20130076177 A, Seok
- US 20170324311 A, Tsutsui
- US 20130134805 A, Jung
- US 20210376676 A, Takenori
- EP 0814558 A2
- US 20130134806 A, Cho
- US 5925965 A, Li
- US 20100295389 A, Tessier

### Non-patent literature cited in the description

- **TAKENO M** ; **CHIBA A** ; **HOSHI N** ; **OGASAWARA S** ; **TAKEMOTO M** ; **RAHMAN MA**. Test results and torque improvement of the 50-kW switched reluctance motor designed for hybrid electric vehicles. *IEEE Trans. on Industry Applications*, 2012, vol. 48 (4), 1327-1334
- Average Rated Torque Calculations for Switched Reluctance Machines Based on Vector Analysis. **STUIKYS, A.** ; **SYKULSKI, J.** IntechOpen Access Books. 2020
- **TEIA, L.** Dual-Sided Rotor Design for Performance Boost of Synchronous Reluctance Motors in Electric Vehicles. *Journal of Applied Physics Research*, 2024, https://ccsenet.org/journal/index.php/apr/issue/archives
- **BOLOGNESI, P.** Design and manufacturing of an unconventional variable reluctance machine.. *4th IET Conf. On Power Electronics, Machines and Drives*, 2008, 45-49
- **TORKAMAN, H.** ; **GHAHERI, A** ; **KEYHANI, A**. Axial flux switched reluctance machines: a comprehensive review of design and topologies. *IET Electric Power Applications*, 2019, vol. 13 (3), 310-321